# EUROPEAN PATENT SPECIFICATION

(11) **EP 4 203 409 B1**
(45) Date of publication and mention of the grant of the patent: **29.07.2026**
(21) Application number: 21868349.8
(22) Date of filing: 10.08.2021
(51) Int. Cl.: H04L 41/00, H04W 4/80, H04W 84/12

(54) **METHOD AND DEVICES FOR CONFIGURING DEVICE**
VERFAHREN UND VORRICHTUNGEN ZUR KONFIGURATION EINER VORRICHTUNG
PROCÉDÉ ET DISPOSITIFS DE CONFIGURATION DE DISPOSITIF

(30) Priority: 18.09.2020 CN 202010988834
(43) Date of publication of application: 28.06.2023
(73) Proprietor: Huawei Technologies Co., Ltd., Shenzhen, Guangdong 518129 (CN)
(72) Inventor: XU, Jianfeng, Shenzhen, Guangdong 518129 (CN)
(74) Representative: Isarpatent
(86) International application number: PCT/CN2021/111731
(87) International publication number: WO 2022/057521

(56) References cited:
- WO-A1-2019/153143
- CN-A- 105 101 464
- CN-A- 106 375 167
- CN-A- 108 391 238
- CN-A- 108 391 238
- CN-A- 108 632 056
- CN-A- 108 924 135

## Description

### TECHNICAL FIELD

This application relates to the field of terminal technologies, and in particular, to a device configuration method and a device as well as a computer-readable storage medium.

### BACKGROUND

With continuous development of terminal technologies, devices of various types and functions are increasingly popular. These devices may be smart home devices such as a smart speaker and a smart switch. During use, these devices usually need to be connected to a network device to communicate with a server and another device. Therefore, a device configuration method is urgently needed.

In the conventional technology, a device that is not network-configured, for example, a smart speaker, can be connected to a network device only based on network configuration information of the network device. The device that is not network-configured may have no input device, and therefore cannot directly receive the network configuration information entered by a user. Therefore, the user needs to connect another device having an input device, for example, a mobile phone, to the device that is not network-configured, and provide the network configuration information for the device that is not network-configured. It can be seen that this configuration method is complex and inefficient.

CN 108 391 238 A discloses a network provisioning method for a wireless MESH network where an initial smart device is configured via Bluetooth from a mobile terminal. The provisioned initial device then automatically provisions other unprovisioned smart devices by receiving their probe requests, verifying their device information for anti-counterfeiting, and securely sending them network configuration information

### SUMMARY

The invention is defined by the subject matter of the independent claims. Advantageous enhancements are subject to the dependent claims.

The first device sends the network configuration information to at least one third device. The network configuration information is used to connect the first device and the at least one third device to a network device. One of the first device and any third device is provided with a first antenna, and the other is provided with a second antenna. A transmit power of the first antenna is less than a first power threshold. A longest transmit distance of the first antenna is a first distance threshold. A transmit power of the second antenna is greater than the first power threshold.

At least one of the first device and the third device may be an Internet of things (internet of things, IoT) device such as a home device. The second device may be an electronic device that stores the network configuration information. The second device may alternatively be an IoT device such as a home device that stores the network configuration information. For example, the first device and the third device may be a plurality of speakers in one speaker system, and the second device may be a mobile phone.

It should be noted that the first antenna may be used as a weak antenna or a dummy antenna, the second antenna may be used as a strong antenna or a real antenna, and the first distance threshold may be the longest transmit distance when a signal is transmitted through the first antenna. In some embodiments, the first antenna may be configured to transmit the signal, and the second antenna may be configured to receive and transmit the signal.

In this embodiment of this application, in this embodiment of this application, the first device may receive the network configuration information from the second device. If there is the at least one third device within a first distance threshold range of the first device (that is, a distance from the first device is less than or equal to the first distance threshold), one of the third device and the first device is provided with the first antenna, and the other is provided with the second antenna. The transmit power of the second antenna is greater than a power threshold 1 that is greater than the transmit power of the first antenna. In this case, the first device may send the network configuration information to the at least one third device. Because the network configuration information may indicate that the first device or the third device is connected to the network device, the at least one third device may be connected to the network device based on the network configuration information. Similarly, the at least one third device may also send the network configuration information to more devices in the foregoing manner, so that the network configuration information can be quickly sent to other devices. In this way, the other devices can also be quickly connected to the network device without a need of being configured one by one by a user. This greatly improves configuration efficiency.

It should be noted that the first terminal may also provide more types of device configuration information to the third device in a manner similar to that of providing the network configuration information to the third device.

Optionally, the network configuration information includes a device identifier (for example, a service set identifier (service set identifier, SSID)) of the network device and a password of the network device.

### BRIEF DESCRIPTION OF DRAWINGS

FIG. 1 is a schematic diagram of a structure of a home device according to an embodiment of this application;
FIG. 2A is a schematic diagram of a structure of an antenna according to an embodiment of this application;
FIG. 2B is a schematic diagram of a structure of another antenna according to an embodiment of this application;
FIG. 2C is a schematic diagram of a structure of still another antenna according to an embodiment of this application;
FIG. 2D is a schematic diagram of a structure of yet another antenna according to an embodiment of this application;
FIG. 2E is a schematic diagram of a communication scenario according to an embodiment of this application;
FIG. 3 is a schematic diagram of a structure of an electronic device according to an embodiment of this application;
FIG. 4 is a schematic diagram of a structure of a device configuration system according to an embodiment of this application;
FIG. 5A and FIG. 5B are a schematic diagram of a structure of another device configuration system according to an embodiment of this application;
FIG. 6 is a flowchart of a device configuration method according to an embodiment of this application;
FIG. 7A, FIG. 7B, FIG. 7C, and FIG. 7D are schematic diagrams of a home device state according to an embodiment of this application;
FIG. 8A and FIG. 8B are schematic diagrams of another home device state according to an embodiment of this application;
FIG. 9A, FIG. 9B, and FIG. 9C are schematic diagrams of still another home device state according to an embodiment of this application;
FIG. 10 is a flowchart of another device configuration method according to an embodiment of this application;
FIG. 11A and FIG. 11B are schematic diagrams of a device state according to an embodiment of this application;
FIG. 12A, FIG. 12B, and FIG. 12C are schematic diagrams of another device state according to an embodiment of this application;
FIG. 13A, FIG. 13B, FIG. 13C, and FIG. 13D are schematic diagrams of still another device state according to an embodiment of this application; and
FIG. 14 is a flowchart of still another device configuration method according to an embodiment of this application.

### DESCRIPTION OF EMBODIMENTS

The device configuration method provided in embodiments of this application may be applied to home devices such as a smart speaker, a smart switch, a smart socket, a smart refrigerator, a smart air conditioner, a smart light bulb, a smart TV, a smart camera, a smart fan, a rice cooker, a weight scale, or a body fat scale. It may also be applied to IoT devices such as a detection device, a sensor device, and a security protection device that need to be connected to a network device through configuration in other scenarios. A specific type of the Internet of things device is not limited in embodiments of this application. Certainly, in actual application, the device configuration method provided in embodiments of this application may also be applied to an electronic device.

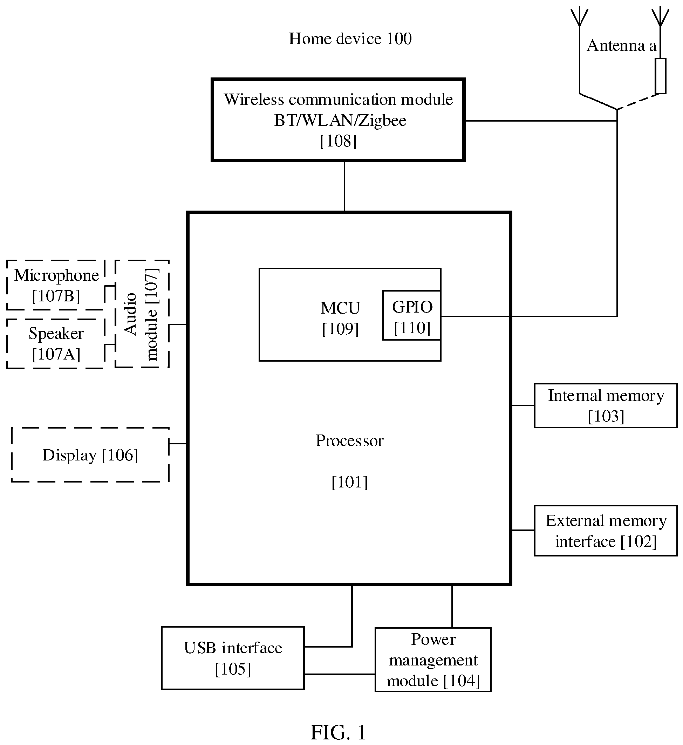

FIG. 1 is a schematic diagram of a structure of a home device 100 according to an embodiment of this application. As shown in FIG. 1, the home device 100 may include a processor 101, an external memory interface 102, an internal memory 103, a USB interface 105, a power management module 104, an antenna, a wireless communication module 108, and another functional module. The another functional module is configured to implement a related function of the home device 100. For example, a smart speaker may include an audio module 107, a speaker 107A, a display 106, and the like. A smart TV may also include the audio module 107, the speaker 107A, the display 106, and the like. For another example, a smart air conditioner may include a cooling module and the like, and a smart light bulb may include a light emitting module and the like.

The processor 101 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. A memory may be further disposed in the processor 101, and is configured to store instructions and data.

The controller may be a nerve center and a command center of the home device 100. The controller may generate an operation control signal based on an instruction operation code and a time sequence signal, to control instruction reading and instruction execution.

The power management module 104 is configured to connect to a power supply. The power management module 104 may be further connected to the processor 101, the internal memory 103, the display 106, the wireless communication module 108, and the like. The power management module 104 receives an input of the power supply through the USB interface 105, and supplies power to the processor 101, the internal memory 103, the display 106, the wireless communication module 108, and the like. In some embodiments, the power management module 104 may alternatively be disposed in the processor 101.

A wireless communication function of the home device 100 may be implemented through the antenna a, the wireless communication module 108, and the like.

The wireless communication module 108 may be one or more components that integrate at least one communication processor module. The wireless communication module 108 receives an electromagnetic wave through the antenna a, performs frequency modulation and filtering processing on the electromagnetic wave signal, and sends a processed signal to the processor 101. The wireless communication module 108 may further receive a to-be-sent signal from the processor 101, perform frequency modulation and amplification on the signal, and convert a processed signal into an electromagnetic wave for radiation through the antenna. In some embodiments, the antenna a of the home device 200 is coupled to the wireless communication module 108, so that the home device 100 may communicate with a network and another device by using a wireless communication technology. For example, the wireless communication module 108 in this embodiment of this application may be a Bluetooth module or a Wi-Fi module. The wireless communication module 108 is configured to transmit data with devices such as an electronic device 100, a router 120, and a cloud server 130. In some examples, the wireless communication module 108 may provide a wireless communication solution based on a WLAN (for example, Wi-Fi) network, BT, Zigbee, or the like.

The antenna a may include one or more antennas. The one or more antennas may be divided into a first antenna (namely, an ultra-short-range antenna, also known as a weak antenna or a dummy antenna) and a second antenna (namely, a normal antenna, also known as a strong antenna or a real antenna). A transmit power of a wireless signal transmitted by the first antenna may be less than a first power threshold, and a longest transmit distance is a first distance threshold. A transmit power of a wireless signal transmitted by the second antenna may be greater than the first power threshold, and a longest transmit distance is a second distance threshold. The first distance threshold may be less than the second distance threshold. The second antenna and the first antenna may be switched. The second antenna and the first antenna implement network communication with the another device (for example, a mobile phone) by using the wireless communication module on the home device 100.

In some examples, the processor 101 includes an MCU 109, and the MCU 109 is provided with a GPIO interface 110. The MCU 109 may control switching between the second antenna and the first antenna through the GPIO 110.

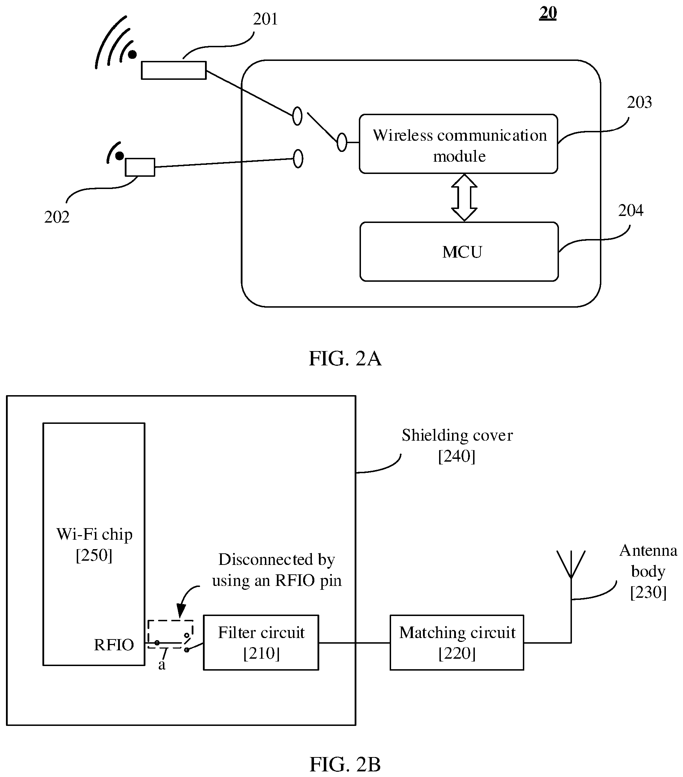

FIG. 2A is a schematic diagram of a structure of an antenna in the home device 100 according to an embodiment of this application.

In an example, the second antenna and the first antenna may be two different antennas. The home device 100 shown in FIG. 1 may be an electronic device 20 (for example, a speaker) shown in FIG. 2A. The electronic device 20 may include a micro control unit MCU 204, a wireless communication module 203, an antenna 201, and an antenna 202.

The antenna 201 shown in FIG. 2A is the second antenna, and the antenna 202 is the first antenna. The antenna a shown in FIG. 1 may include the antenna 201 and the antenna 202 shown in FIG. 2A. The wireless communication module 108 shown in FIG. 1 may be the wireless communication module 203 shown in FIG. 2A. The MCU 204 shown in FIG. 2A may be the MCU 110 in FIG. 1 or implemented by the processor 101 in FIG. 1. The wireless communication module 203 may be a Wi-Fi chip, and a radio frequency input/output (radio frequency input/output, RFIO) pin of the wireless communication module 203 is connected to the antenna 201 or the antenna 202 by using a single pole double throw switch.

The MCU 204 may include a central processing unit, a memory, a counter, a clock, an interrupt, a serial peripheral interface (serial peripheral interface, SPI), a UART interface, a universal serial bus interface, and the like. The UART interface is a universal serial data bus, and is configured to perform asynchronous communication. The bus may be a two-way communication bus, and converts to-be-transmitted data between serial communication and parallel communication.

In some embodiments, the MCU 204 exchanges information with the wireless communication module 203 by using the UART interface. The wireless communication module 203 is configured to implement wireless communication between the home device 100 and the another device (for example, the mobile phone). For a detailed description of the wireless communication module 203, refer to the detailed description of the wireless communication module 108 in the foregoing embodiment. Details are not described herein again.

The antenna 201 and the antenna 202 are configured to transmit and receive an electromagnetic wave. Further, the wireless communication module 203 may convert the electromagnetic wave received from the antenna 201 or the antenna 202 into a signal, and send the signal to the MCU 204 for processing. Alternatively, the wireless communication module 203 may receive a to-be-sent signal from the MCU 204, and convert the signal into an electromagnetic wave for radiation through the antenna 201 or the antenna 202.

In some embodiments, the MCU 204 may control switching between the antenna 201 and the antenna 202. When the home device 100 uses the antenna 201, if a distance between the home device 100 and the another device (for example, a mobile phone) is less than the second distance threshold, the another device (for example, the mobile phone) can receive a signal transmitted by the home device 100 through the antenna 201, so as to implement communication between the another device and the home device 100. When the home device 100 uses the antenna 202, if a distance between the home device 100 and the another device (for example, a mobile phone) is less than or equal to the first distance threshold, the another device can receive a signal transmitted by the home device 100 through the antenna 202, so as to implement communication between the another device and the home device 100. Similarly, the antenna 201 or the antenna 202 may also be disposed on the another device. When the another device uses the antenna 201, if a distance between the home device 100 and the another device (for example, the mobile phone) is less than or equal to the second distance threshold, the home device 100 can receive a signal transmitted by the another device through the antenna 201. When the another device uses the antenna 202, if a distance between the home device 100 and the another device is less than or equal to the first distance threshold, the home device 100 can receive a signal transmitted by the another device through the antenna 202. It can be seen that, if any one of the home device 100 and the another device is provided with the antenna 202 (namely, the weak antenna), and regardless of whether the other is provided with the antenna 202 (namely, the real antenna) or the antenna 201, as long as the distance between the home device 100 and the another device is less than or equal to the first distance threshold, the home device 100 and the another device can receive and transmit signals to each other.

For example, the home device 100 may send a first message or a second message to a surrounding device through the antenna 201. The home device 100 may receive, through the antenna 202, a neighborhood aware network (neighborhood aware network, NAN) publication message sent by the another device. The home device 100 may further be connected to a Wi-Fi router through the antenna 201 or the antenna 202.

In some other embodiments, the second antenna and the first antenna may share a part of cabling, for example, as described in embodiments shown in FIG. 2B to FIG. 2D.

In this embodiment of this application, the home device 100 implements ultra-short-range communication through the first antenna. In this embodiment of this application, the dual antennas (the first antenna and the second antenna) in the home device 100 may be switched by using a radio frequency switch. Physically, both the first antenna and the radio frequency switch (a first antenna shown in the dashed box in FIG. 2B to FIG. 2D) may be disposed in a shielding cover, or the first antenna may be disposed in a chip. FIG. 2B to FIG. 2D are schematic diagrams of three structures of the first antenna.

An objective of the first antenna in this embodiment of this application is to reduce a transmit distance as much as possible. A principle of constructing the first antenna may be as follows:
(1) reducing a length of the antenna, to reduce an electromagnetic wave radiated to the air;
(2) reducing radiation efficiency, and converting, by using a resistor, partial electromagnetic radiation into heat energy to be consumed; and
(3) reducing a return loss and reflecting partial radio frequency energy back to a chip.

The first antenna may be specifically implemented as follows:
(1) shortening the antenna;
(2) disconnecting a point in a path of a real antenna, or grounding the point through a resistor, an inductor, or a capacitor; and
(3) using a shielding cover.

It should be understood that specific implementations (1) and (2) of the first antenna may be implemented on a PCB board or inside a chip.

It should be further understood that a function of the shielding cover is to block a path in which an electromagnetic wave is radiated by the antenna to the receiver, so as to achieve an objective of weakening radiation.

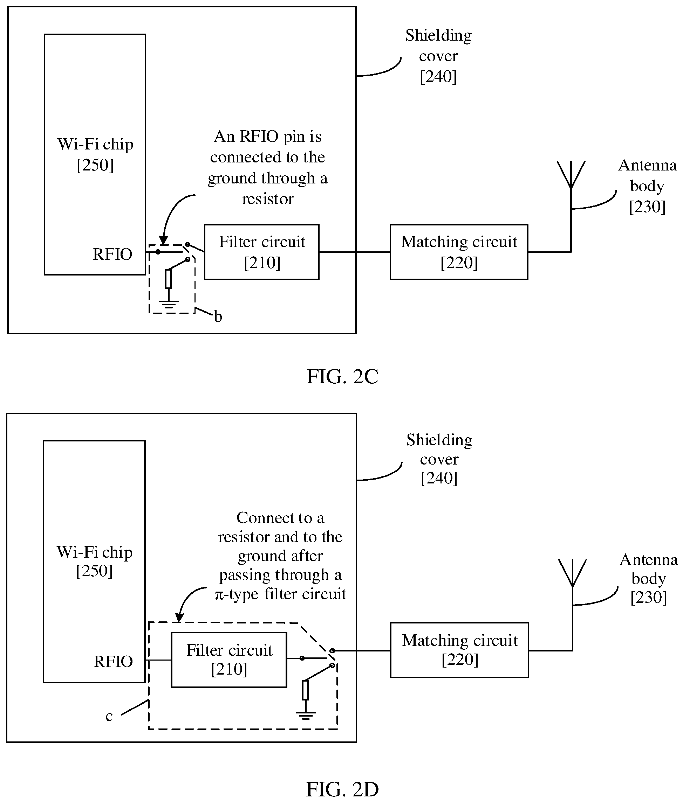

It should be further understood that the shortening the antenna means that the first antenna is shorter than the second antenna. Structures of the three first antennas are shown in FIG. 2B to FIG. 2D. The first antennas are shown in dashed boxes in FIG. 2B to FIG. 2D. In a structure of the second antenna in FIG. 2B to FIG. 2D, a filter circuit 210 (for example, a π-type circuit), a matching circuit 220 (for example, a π-type circuit), and an antenna body 230 (for example, the antenna body may be a metal cabling) outside the matching circuit 220 are connected by using an RFIO pin. The first antenna a shown in the dashed box in FIG. 2B, the first antenna b shown in the dashed box in FIG. 2C, and the first antenna c shown in the dashed box in FIG. 2D have different lengths, but each is shorter than the second antenna. The filter circuit is configured to prevent interference, and the matching circuit 220 is configured to match the second antenna.

For example, as shown in FIG. 2B, the first antenna a may be directly disconnected by using a radio frequency input/output (radio frequency input/output, RFIO) pin of a Wi-Fi chip 250 in a shielding cover 240. The first antenna a may include an RFIO pin, a cabling, and a first-way switch (the first-way switch is not connected to any component) in a 2-way switch. The 2-way switch is a switch between an RFIO and the filter circuit, and the RFIO pin may be connected to or disconnected from the filter circuit 210 by using the switch. The first-way switch is a switch that is shown in FIG. 2B and that is connected to the RFIO pin and disconnected from the filter circuit 210. It should be understood that the 2-way switch in this embodiment of this application may be a single pole double throw switch.

For example, as shown in FIG. 2C, the first antenna b may be connected to the ground by using a matching component (for example, a resistor) via the RFIO of the Wi-Fi chip 250 in the shielding cover 240. The first antenna b may include an RFIO pin, a cabling, a first-way switch (the first-way switch is connected to a resistor) in a 2-way switch, and the resistor. A partial electromagnetic wave radiation may be converted, through resistor grounding, into the heat energy to be consumed, to reduce radiation efficiency of the first antenna b. The 2-way switch is a switch between the RFIO pin and each of the resistor and the filter circuit. By using the switch, the RFIO pin may be connected to the resistor and disconnected from the filter circuit 210, or the RFIO pin may be disconnected from the resistor and connected to the filter circuit 210. The first-way switch is a switch connected to the resistor and disconnected from the filter circuit.

For example, as shown in FIG. 2D, the first antenna c may be connected to a matching component (for example, a resistor) by using the RFIO pin of the Wi-Fi chip 250 in the shielding cover 240, and then to the ground after passing through a chip-matched filter circuit 220. The first antenna c may include an RFIO pin, a cabling, the filter circuit 210, a first-way switch (the first-way switch is connected to a resistor) in a 2-way switch, and the resistor. A partial electromagnetic wave radiation may be converted, through resistor grounding, into the heat energy to be consumed, to reduce radiation efficiency of the first antenna b. The 2-way switch is a switch between the filter circuit 210 in the shielding cover 240 and each of the resistor and the matching circuit 220 outside the shielding cover 240. By using the switch, the filter circuit 210 in the shielding cover 240 may be connected to the resistor and disconnected from the matching circuit 220 outside the shielding cover, or the filter circuit 210 in the shielding cover 240 may be disconnected from the resistor and connected to the matching circuit 220 outside the shielding cover 240. The first-way switch is a switch that connects the filter circuit 210 in the shielding cover 240 and the resistor.

It should be understood that the second antenna in FIG. 2B to FIG. 2C may include an RFIO pin, a cabling, a second-way switch in the 2-way switch, the filter circuit 210, the matching circuit 220, and the antenna body 230 connected outside the matching circuit 220. The second-way switch is a switch that connects the RFIO pin and the filter circuit 210.

The second antenna in FIG. 2D may include an RFIO pin, the filter circuit 210, a cabling, a second-way switch in the 2-way switch, the matching circuit 220, and the antenna body 230 connected outside the matching circuit 220. The second-way switch is a switch that connects the filter circuit 210 in the shielding cover 240 and the matching circuit 220 outside the shielding cover 240.

It should be understood that the wireless communication module 203 shown in FIG. 2A may be the Wi-Fi chip 250 in FIG. 2B to FIG. 2C.

The foregoing different first antenna structures cooperate with different transmit power (Tx power) settings of the Wi-Fi chip 250, so that different ultra-short-range communication requirements (for example, from 10 cm to 2 m) can be met.

For example, Table 1 shows communication distances of several different first antenna structures in cooperation with different transmit powers.

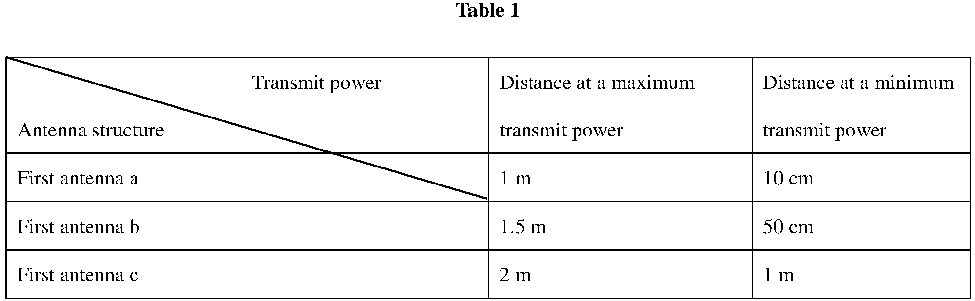

Due to a characteristic of a physical component in the chip, a difference between the maximum transmit power and the minimum transmit power of the antenna is related. If a minimum transmit power of the home device 100 is reduced to a very low value, a maximum transmit power is also reduced. In this way, a distance requirement during normal working is not met. In this embodiment of this application, because different home devices 100 have different structures and have different security performance requirements for the home devices 100, manufacturers of the home devices 100 may use different first antenna structures and transmit powers to ensure a communication distance of the home devices 100. For example, for manufacturers of different smart air conditioners, thicknesses of housings of the smart air conditioners may be different. In this case, when the first antenna structures and transmit powers each are the same, communication distances at which the smart air conditioners can be discovered may also be different. Different manufacturers of the home device 100 may test and obtain, based on a structure of the smart device, a structure of the first antenna, and a specific transmit power, a safe distance at which the home device 100 is discovered.

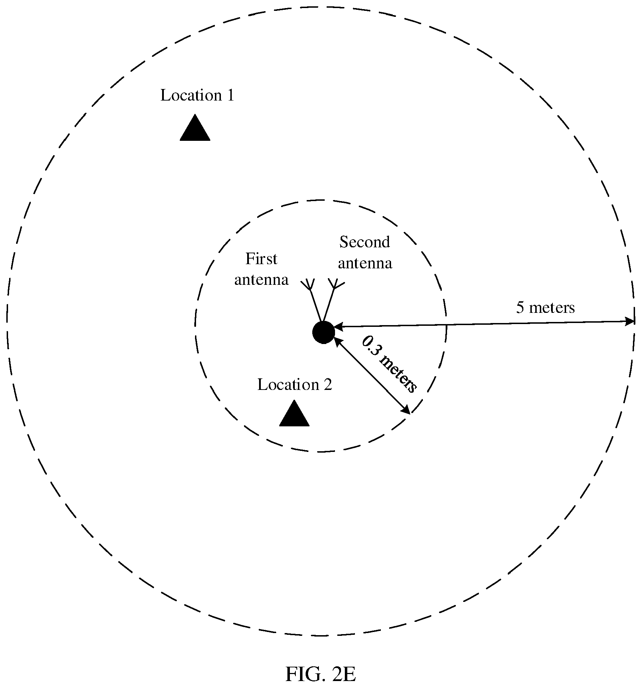

With reference to the foregoing example, an example in which the second distance threshold is 5 meters and the first distance threshold is 0.3 meters is used. When the home device 100 uses the second antenna (namely, the strong antenna), if a distance between the home device 100 and the another device (for example, a mobile phone) is less than the second distance threshold (for example, the another device is located at a location 1 shown in FIG. 2E), the home device 100 may communicate with the another device (for example, a speaker). When the home device 100 uses the first antenna (namely, the weak antenna), if a distance between the home device 100 and the another device (for example, a mobile phone) is less than the first distance threshold (for example, the another device is located at a location 2 shown in FIG. 2E), the home device 100 may communicate with the another device (for example, the mobile phone).

The home device 100 implements a display function by using the GPU, the display 106, the application processor, and the like. The GPU is a microprocessor for image processing, and connects the display 106 to the application processor. The GPU is configured to perform mathematical and geometric calculation, and render an image. The processor 101 may include one or more GPUs that execute program instructions to generate or change display information.

The display 106 is configured to display an image, a video, and the like. The display 394 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the home device 100 may include one or N displays 106, where N is a positive integer greater than 1.

The video codec is configured to compress or decompress a digital video. The home device 100 may support one or more video codecs. In this way, the home device 100 may play or record videos in a plurality of coding formats, for example, moving picture experts group (moving picture experts group, MPEG)-1, MPEG-2, MPEG-3, and MPEG-4.

The internal memory 103 may be configured to store computer-executable program code, where the executable program code includes instructions. The processor 101 runs the instructions stored in the internal memory 103, to perform various function applications of the home device 100 and data processing. The internal memory 103 may include a program storage area and a data storage area. The program storage area may store an operating system, an application required by at least one function (for example, a sound playing function or an image playing function), and the like. The data storage area may store data (for example, an audio playback record) and the like created when the home device 100 is used. In addition, the internal memory 103 may include a high-speed random access memory, or may include a nonvolatile memory, for example, at least one magnetic disk storage device, a flash memory, or a universal flash storage (universal flash storage, UFS).

The external memory interface 102 may be configured to connect to an external storage card, for example, a micro SD card, to extend a storage capability of the advertising device 120. The external storage card communicates with the processor 301 through the external memory interface 102, to implement a data storage function. For example, files such as music and videos are stored in the external storage card.

The home device 100 may implement an audio function, for example, music playing and recording, and voice sampling, through the audio module 107, the speaker 107A, a microphone 107B, the application processor, and the like.

The audio module 107 is configured to convert digital audio information into an analog audio signal for output, and is also configured to convert an analog audio input into a digital audio signal. The audio module 107 may be further configured to code and decode an audio signal. In some embodiments, the audio module 107 may be disposed in the processor 101, or some functional modules in the audio module 107 are disposed in the processor 101. The speaker 307A, also referred to as a "loudspeaker", is configured to convert an audio electrical signal into a sound signal. The microphone 107B, also referred to as a "mike" or a "mic", is configured to collect a sound signal and convert the sound signal into an electrical signal.

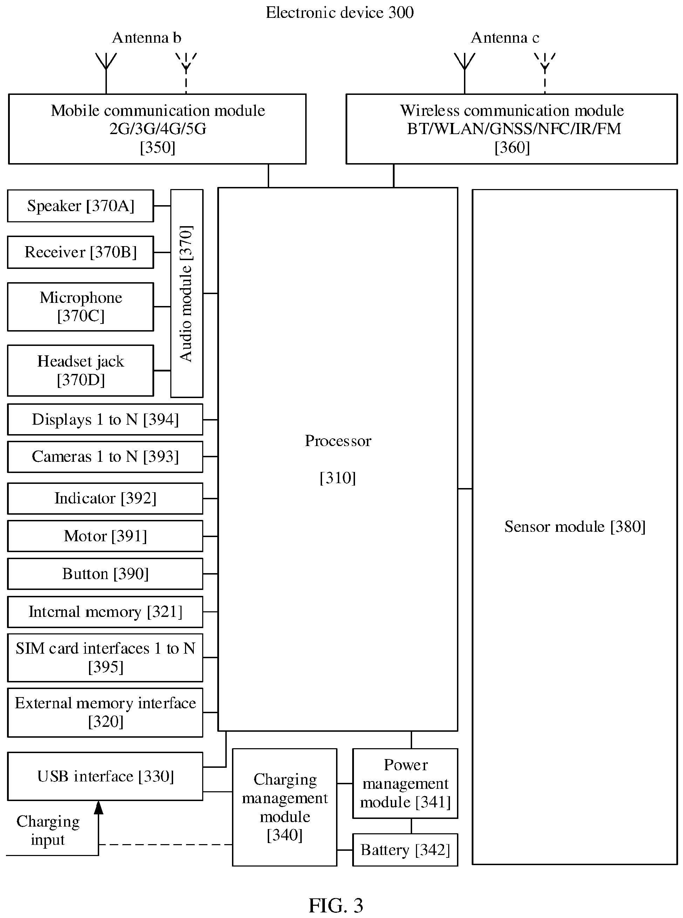

For example, the electronic device in this embodiment of this application may be a device including a display and a short-range communication module, such as a mobile phone, a tablet computer, a laptop computer, a wearable device (for example, a smart watch), a handheld computer, a notebook computer, an ultra-mobile personal computer (ultra-mobile personal computer, UMPC), a netbook, a cellular phone, a personal digital assistant (personal digital assistant, PDA), or an augmented reality (augmented reality, AR) or virtual reality (virtual reality, VR) device. A specific form of the electronic device is not specifically limited in this embodiment of this application. FIG. 3 is a schematic diagram of a structure of an electronic device 300 provided in this application. The electronic device 300 may include a processor 310, an external memory interface 320, an internal memory 321, a universal serial bus (universal serial bus, USB) interface 330, a charging management module 340, a power management module 341, a battery 342, an antenna b, an antenna c, a mobile communication module 350, a wireless communication module 360, an audio module 370, a speaker 370A, a receiver 370B, a microphone 370C, a headset jack 370D, a sensor module 380, a button 390, a motor 391, an indicator 392, a camera 393, a display 394, a subscriber identification module (subscriber identification module, SIM) card interface 395, and the like.

It may be understood that the structure shown in this embodiment of this application does not constitute a specific limitation on the electronic device 300. In some other embodiments of this application, the electronic device 300 may include more or fewer components than those shown in the figure, or some components may be combined, or some components may be split, or different component arrangements may be used. The components shown in the figure may be implemented by hardware, software, or a combination of software and hardware.

The processor 310 may be similar to or the same as the foregoing processor 101. Details are not described herein again.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 310 may include a plurality of groups of I2C buses. The processor 310 may be coupled to a touch sensor 380K, a charger, a flash light, the camera 393, and the like through different I2C bus interfaces. For example, the processor 310 may be coupled to the touch sensor 380K through the I2C interface, so that the processor 310 communicates with the touch sensor 380K through the I2C bus interface to implement a touch function of the electronic device 300.

The I2S interface may be configured to perform audio communication. In some embodiments, the processor 310 may include a plurality of groups of I2S buses. The processor 310 may be coupled to the audio module 370 through the I2S bus, to implement communication between the processor 310 and the audio module 370. In some embodiments, the audio module 370 may send an audio signal to the wireless communication module 360 through the I2S interface, to implement a function of answering a call through a Bluetooth headset.

The PCM interface may also be used to perform audio communication, and sample, quantize, and code an analog signal. In some embodiments, the audio module 370 may be coupled to the wireless communication module 360 through the PCM bus interface. In some embodiments, the audio module 370 may also transmit an audio signal to the wireless communication module 360 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 310 to the wireless communication module 360. For example, the processor 310 communicates with a Bluetooth module in the wireless communication module 360 through the UART interface, to implement a Bluetooth function. In some embodiments, the audio module 370 may transmit an audio signal to the wireless communication module 360 through the UART interface, to implement a function of playing music through a Bluetooth headset.

The MIPI interface may be configured to connect the processor 310 to a peripheral component such as the display 394 or the camera 393. The MIPI interface includes a camera serial interface (camera serial interface, CSI), a display serial interface (display serial interface, DSI), and the like. In some embodiments, the processor 310 communicates with the camera 393 through the CSI, to implement a photographing function of the electronic device 300. The processor 310 communicates with the display 394 through the DSI interface, to implement a display function of the electronic device 300.

The GPIO interface may be configured by software. The GPIO interface may be configured as a control signal or a data signal. In some embodiments, the GPIO interface may be configured to connect the processor 310 to the camera 393, the display 394, the wireless communication module 360, the audio module 370, the sensor module 380, and the like. The GPIO interface may alternatively be configured as an I2C interface, an I2S interface, a UART interface, an MIPI interface, or the like.

The USB interface 330 is an interface that conforms to a USB standard specification, and may be specifically a mini USB interface, a micro USB interface, a USB Type-C interface, or the like. The USB interface 330 may be configured to connect to the charger to charge the electronic device 300, or may be configured to transmit data between the electronic device 300 and a peripheral device, or may be configured to connect to a headset for playing audio through the headset. The interface may be further configured to connect to other electronic devices such as an AR device.

It can be understood that an interface connection relationship between modules illustrated in this embodiment of this application is merely an example for description, and does not constitute a limitation on the structure of the electronic device 300. In some other embodiments of this application, the electronic device 300 may alternatively use an interface connection manner different from the interface connection manner in this embodiment, or a combination of a plurality of interface connection manners.

The charging management module 340 is configured to receive a charging input from the charger. The charger may be a wireless charger or a wired charger. In some embodiments of wired charging, the charging management module 340 may receive a charging input from the wired charger through the USB interface 330. In some embodiments of wireless charging, the charging management module 340 may receive a wireless charging input through a wireless charging coil of the electronic device 300. When charging the battery 342, the charging management module 340 may further supply power to the electronic device by using the power management module 341.

The power management module 341 is configured to connect the battery 342 and the charging management module 340 to the processor 310. The power management module 341 receives an input from the battery 342 and/or the charging management module 340, and supplies power to the processor 310, the internal memory 321, an external memory, the display 394, the camera 393, the wireless communication module 360, and the like. The power management module 341 may further be configured to monitor parameters such as a battery capacity, a battery cycle count, and a battery health status (electric leakage or impedance). In some other embodiments, the power management module 341 may alternatively be disposed in the processor 310. In some other embodiments, the power management module 341 and the charging management module 340 may alternatively be disposed in a same component.

A wireless communication function of the electronic device 300 may be implemented through the antenna b, the antenna c, the mobile communication module 350, the wireless communication module 360, the modem processor, the baseband processor, and the like.

The antenna b and the antenna c are configured to transmit and receive electromagnetic wave signals. Each antenna in the electronic device 300 may be configured to cover one or more communication frequency bands. Different antennas may be further multiplexed, to improve antenna utilization. For example, the antenna b may be multiplexed as a diversity antenna of a wireless local area network. In some other embodiments, the antenna may be used in combination with a tuning switch. In some embodiments, at least one of the antenna b and the antenna c may be similar to or the same as the foregoing antenna a, that is, at least one of the antenna b and the antenna c may include the first antenna and the second antenna.

The mobile communication module 350 may provide a wireless communication solution that is applied to the electronic device 300 and that includes 2G, 3G, 4G, and 5G. The mobile communication module 350 may include at least one filter, a switch, a power amplifier, a low noise amplifier (low noise amplifier, LNA), and the like. The mobile communication module 350 may receive an electromagnetic wave through the antenna b, perform processing such as filtering or amplification on the received electromagnetic wave, and transmit a processed electromagnetic wave to the modem processor for demodulation. The mobile communication module 350 may further amplify a signal modulated by the modem processor, and convert an amplified signal into an electromagnetic wave for radiation by using the antenna b. In some embodiments, at least some functional modules in the mobile communication module 350 may be disposed in the processor 310. In some embodiments, at least some functional modules in the mobile communication module 350 and at least some modules in the processor 310 may be disposed in a same component.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 370A, the receiver 370B, or the like), or displays an image or a video on the display 394. In some embodiments, the modem processor may be an independent component. In some other embodiments, the modem processor may be independent of the processor 310, and is disposed in a same component along with the mobile communication module 350 or another functional module.

The wireless communication module 360 may be similar to or the same as the foregoing wireless communication module 108.

In some embodiments, the antenna b of the electronic device 300 is coupled to the mobile communication module 350, and the antenna c is coupled to the wireless communication module 360, so that the electronic device 300 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GNASS), a Beidou navigation satellite system (Beidou navigation satellite system, BDS), a quasi-zenith satellite system (quasi-zenith satellite system, QZSS), and/or a satellite based augmentation system (satellite based augmentation system, SBAS).

The display 394 may be similar to or the same as the foregoing display 106.

The electronic device 300 may implement a photographing function by using the ISP, the camera 393, the video codec, the GPU, the display 394, the application processor, and the like.

The ISP is configured to process data fed back by the camera 393. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 393.

The camera 393 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 300 may include one or N cameras 393, where N is a positive integer greater than 1.

The digital signal processor is configured to process a digital signal, and may process another digital signal in addition to the digital image signal. For example, when the electronic device 300 performs frequency selection, the digital signal processor is configured to perform Fourier transform on frequency energy.

The NPU is a neural-network (neural-network, NN) computing processor. The NPU quickly processes input information by referring to a structure of a biological neural network, for example, a transfer mode between human brain neurons, and may further continuously perform self-learning. The NPU may implement intelligent cognition of the electronic device 300 and other applications, for example, image recognition, facial recognition, speech recognition, and text understanding.

The external memory interface 320 may be similar to or the same as the foregoing external memory interface 102.

The internal memory 321 may be similar to or the same as the foregoing internal memory 103.

The electronic device 300 may implement audio functions, for example, music playing and recording, by using the audio module 370, the speaker 370A, the receiver 370B, the microphone 370C, the headset jack 370D, the application processor, and the like.

The audio module 370, the speaker 370A, and the microphone 370C may be respectively similar to or the same as the foregoing audio module 107, the speaker 107A, and the microphone 107B.

The receiver 307B, also referred to as a "loudspeaker", is configured to convert an audio electrical signal into a sound signal. When the electronic device 300 receives a call or voice information, a voice may be received by placing the receiver 370B close to an ear.

The headset jack 370D is configured to connect to a wired headset. The headset jack 370D may be the USB interface 330, or may be a 3.5 mm open mobile terminal platform (open mobile terminal platform, OMTP) standard interface, or a cellular telecommunication industry association of the USA (cellular telecommunication industry association of the USA, CTIA) standard interface.

The sensor module 380 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The button 390 includes a power button, a volume button, and the like. The button 390 may be a mechanical button, or a touch button. The electronic device 300 may receive a button input to generate a button signal input related to user settings and function control of the electronic device 300.

The motor 391 may generate a vibration prompt. The motor 391 may be configured to produce an incoming call vibration prompt and a touch vibration feedback. For example, touch operations performed on different applications (for example, photographing and audio play) may correspond to different vibration feedback effects. The motor 391 may also correspond to different vibration feedback effects for touch operations performed on different areas of the display 394. Different application scenarios (for example, a time reminder, information receiving, an alarm clock, and a game) may also correspond to different vibration feedback effects. A touch vibration feedback effect may be further customized.

The indicator 392 may be an indicator light, and may be configured to indicate a charging state and a power change, or may be configured to indicate a message, a missed call, a notification, and the like.

The SIM card interface 395 is configured to connect to a SIM card. The SIM card may be inserted into or removed from the SIM card interface 395, to implement contact with and separation from the electronic device 300. The electronic device 300 may support one or N SIM card interfaces, where N is a positive integer greater than 1. The SIM card interface 395 may support a nano-SIM card, a micro SIM card, a SIM card, and the like. A plurality of cards may be inserted into a same SIM card interface 395 at the same time. The plurality of cards may be of a same type or different types. The SIM card interface 395 may be compatible with different types of SIM cards. The SIM card interface 395 may further be compatible with an external storage card. The electronic device 300 interacts with a network through the SIM card, to implement functions such as conversation and data communication. In some embodiments, the electronic device 300 uses an eSIM, namely, an embedded SIM card. The eSIM card may be embedded into the electronic device 300, and cannot be separated from the electronic device 300.

A software system of the electronic device 300 may use a layered architecture, an event-driven architecture, a micro kernel architecture, a micro service architecture, or a cloud architecture.

The methods in the following embodiments may all be implemented in Internet of things device such as a home device having the foregoing hardware structure and an electronic device having the foregoing hardware structure.

To facilitate understanding of the technical solutions in embodiments of this application, the following first describes an application scenario of embodiments of this application.

Currently, more and more devices are used in life and production. A smartphone home scenario is used as an example. Smart home devices such as a smart speaker, a smart switch, a smart socket, and a smart refrigerator have gradually become popular. These devices may be connected to network devices such as a routing device, a gateway device, or a controlling device, and may also be connected to a server by using the network devices to form a feature-rich network. A user may remotely control these devices to build an ideal home environment. For example, a plurality of smart speakers may form a sound effect environment such as 2.0 stereo or 6.1 stereo. However, because some devices may not have a screen or input device, they usually need to be additionally configured by using other devices.

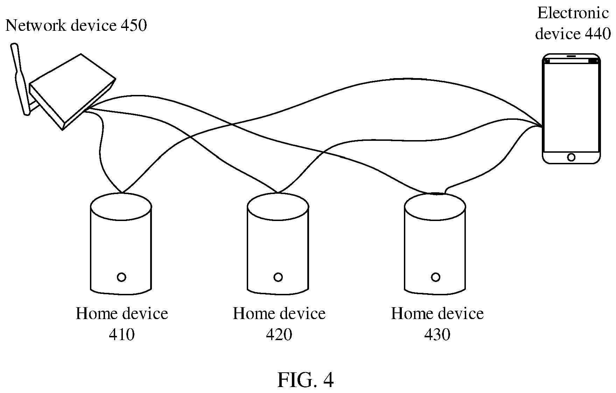

FIG. 4 is a schematic diagram of a structure of a device configuration system according to an embodiment of this application. The system includes a plurality of home devices such as a home device 410, a home device 420, and a home device 430, and further includes an electronic device 440 and a network device 450.

The home device 410, the home device 420, and the home device 430 may not have a screen and input devices such as a keyboard and a keypad. Alternatively, the home device 410, the home device 420, and the home device 430 have a screen and an input device, but a display capability of the screen and an input capability of the input device are weak, making it impossible or inconvenient to interact with a user to obtain network configuration information. For example, the home device 410 is a smart speaker. The smart speaker has the display 106 shown in FIG. 1, but the display 106 is only used to display currently played content. Although there is a key, the key is only used to turn on or off the smart speaker. Obviously, it is difficult for the home device 410 to obtain the network configuration information by interacting with the user. However, if the home device 410 includes the wireless communication module 108, the home device 410 may establish a communication connection to a mobile phone by using the wireless communication module 108, to receive the network configuration information submitted by the user on the electronic device 440.

To establish a communication connection to the electronic device 440 and obtain the network configuration information sent by the electronic device 440, the home device 410, the home device 420, and the home device 430 may enable a soft access point (soft access point, soft AP) mode when being powered on and started, to broadcast their respective SSIDs. The user separately connects the electronic device 440 to the home device 410, the home device 420, and the home device 430 based on SSIDs of the home device 410, the home device 420, and the home device 430 in sequence, to separately send the network configuration information (for example, an SSID and a password of the network device 450 (for example, a router)) of the network device 450 to the home device 410, the home device 420, and the home device 430. When receiving the network configuration information of the network device 450, the home device 410, the home device 420, and the home device 430 disable the soft AP mode, and are connected to the network device 450 based on the network configuration information of the network device 450 (for example, accessing, based on an SSID and a password, a wireless local area network provided by the network device 450). Then, the network device 450 is connected to home cloud to complete registration and network distribution. In the foregoing configuration process, the home device 410, the home device 420, and the home device 430 need to be switched to the soft AP mode, so that the electronic device 440 is sequentially connected to the home device 410, the home device 420, and the home device 430, and sends the network configuration information. In this case, the configuration manner is complicated and inefficient, and configuration time costs are proportional to a quantity of devices.

When a network in which the network device 450 is located is a network based on a Wi-Fi protocol, the network device 450 may be a routing device. When a network in which the network device 450 is located is a network based on a Bluetooth protocol or a Zigbee protocol, the network device 450 may be a gateway device or a controlling device.

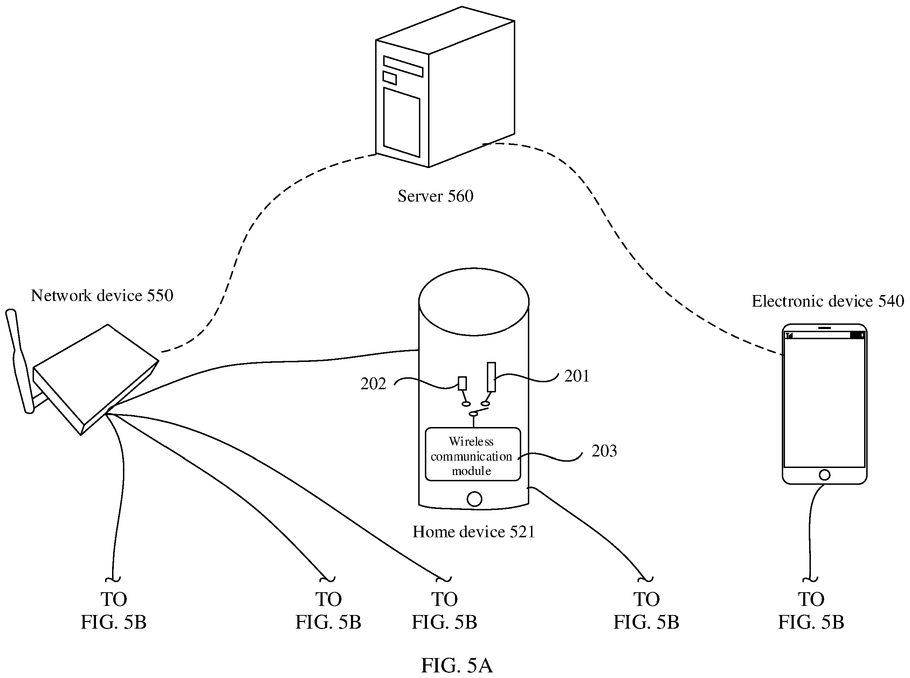

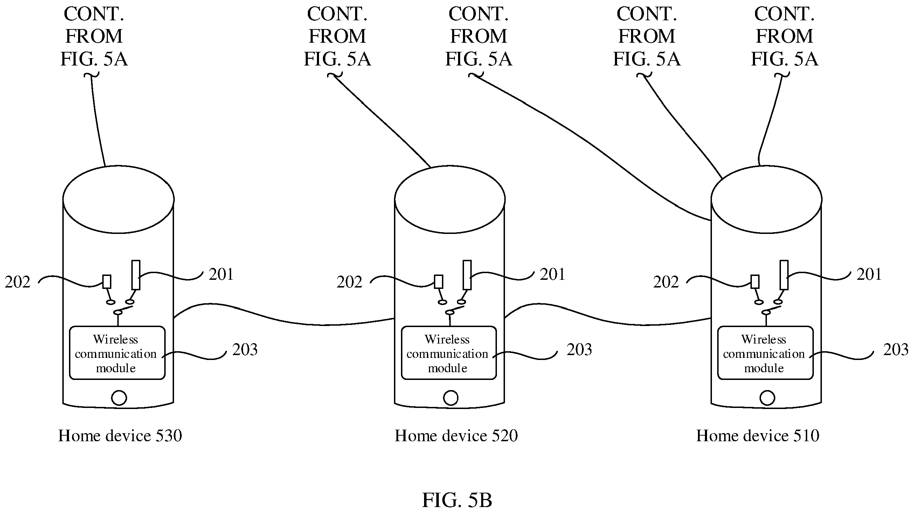

To resolve the foregoing problem, this application provides a schematic diagram of a structure of another device configuration system. Refer to FIG. 5A and FIG. 5B. The system includes a plurality of home devices such as a home device 510, a home device 520, a home device 521, and a home device 530, and further includes an electronic device 540 and a network device 550.

The home device 510, the home device 520, the home device 521, and the home device 530 may be similar to the foregoing home device 410, home device 420, and home device 430, and are inconvenient to directly interact with a user to obtain device configuration information. Certainly, in practical application, whether the home device 510, the home device 520, the home device 521, and the home device 530 have a capability of directly interacting with the user to obtain the device configuration information, they may obtain the device configuration information in a device configuration manner provided in this embodiment of this application, to reduce complex operations of the user and improve configuration efficiency. When a network in which the network device 550 is located is a network based on a Wi-Fi protocol, the network device 550 may be a routing device. When a network in which the network device 550 is located is a network based on a Bluetooth protocol or a Zigbee protocol, the network device 550 may be a gateway device or a controlling device.

The home device 510, the home device 520, the home device 521, and the home device 530 may include the wireless communication module 203, the antenna 201, and the antenna 202 shown in FIG. 2A.

The electronic device 540 may store the device configuration information, or may receive device configuration information submitted by the user. For example, the electronic device 540 may include a mobile phone, a computer, or a smart speaker.

The device configuration information may be used to configure devices such as the home device 510, the home device 520, the home device 521, and the home device 530. The device configuration information may include network configuration information, and the network configuration information may be used by a device to connect to the network device 550. For example, the network configuration information may include a device identifier (for example, an SSID) of the network device 550, and may further include a password of the network device 550. Certainly, in actual application, the device configuration information may also include another type of configuration information. For example, the device configuration information may further include at least one of account registration information, a device control instruction, a device status parameter, and the like.

It is assumed that, in FIG. 3, a distance between the home device 510 and the home device 520, a distance between the home device 510 and the home device 521, a distance between the home device 520 and the home device 530, and a distance between the home device 520 and the home device 521 are all less than or equal to the first distance threshold, and both a distance between the home device 510 and the home device 530 and a distance between the home device 521 and the home device 530 are greater than the second distance threshold.

First, the home device 510 may obtain the device configuration information from the electronic device 540 in any way (for example, in a manner similar to the home device 410, the home device 420, or the home device 430 of FIG. 4). One of the home device 510 and the home device 520 is provided with the first antenna, and the other is provided with the second antenna. One of the home device 510 and the home device 521 is provided with the first antenna, and the other is provided with the second antenna. A longest transmit distance of the first antenna is the first distance threshold. When the home device 510 receives the device configuration information, the home device 510 may send the device configuration information to the home device 520 and the home device 521 that are within a first distance threshold range of the home device 510. Similarly, the home device 520, the home device 521, and the home device 530 may also send the device configuration information to another device, provided that a distance between the another device and the home device 520, the home device 521, and the home device 530 is less than or equal to the first distance threshold. It can be learned that, as long as one device obtains the device configuration information, the device may send the device configuration information to another device within the first distance threshold range. In such a link way, all devices can quickly obtain the device configuration information, and the devices can be configured based on the device configuration information. In addition, a larger quantity of devices indicates a faster diffusion speed of device configuration information, and a faster speed of device configuration. Compared with configuration efficiency of the device configuration system provided in FIG. 4, configuration efficiency of the device configuration system provided in FIG. 5A and FIG. 5B is greatly improved.

In some embodiments, the electronic device 540 may be replaced with any home device that has obtained the device configuration information.

In some embodiments, the system further includes a server 560, and the device configuration information may further include the account registration information. The account registration information may be used for registration in the server 560.

It should be noted that, because the home device 510, the home device 520, the home device 521, and the home device 530 send the device configuration information to the another device within the first distance threshold range, these devices may be devices in a same scenario, for example, home devices in a same home or security protection devices in a same factory. In this case, these devices may be connected to a same server (such as a smart home cloud server or a security cloud server) for registration, so that the user controls these devices by using a device such as the mobile phone. Therefore, when the device configuration information includes the account registration information, the account registration information may be the same. For example, the account registration information may include a user identifier.

In addition, the device control instruction may be used to control a device to perform one or more operations corresponding to the device control instruction. A device configuration parameter may indicate a running state of the device, and the device configuration parameter may be carried in the device control instruction. For example, the device is a smart speaker, the device control instruction may be playing music, and the device configuration parameter may be a volume and a sound channel mode when the music is played. For another example, the device is a smart light bulb, the device control instruction may include turning on a light, and the device configuration parameter may include a light color and brightness.

It should be noted that the device configuration information may include a device control instruction and a device configuration parameter corresponding to a plurality of devices, and the devices may identify the received device control instruction (device configuration parameter) when receiving the device control instruction and the device configuration parameter. If identification succeeds, configuration is performed according to the device control instruction (device configuration parameter); otherwise, the device control instruction (device configuration parameter) is ignored.

For the devices provided in FIG. 1 and FIG. 3 and the device configuration system provided in FIG. 5A and FIG. 5B, the following describes the technical solutions of this application in detail by using specific embodiments. The following several specific embodiments may be combined with each other, and a same or similar concept or process may not be described repeatedly in some embodiments. It should be noted that all or some of the following home devices or electronic devices may be replaced with Internet of things devices, and when the electronic device may also be provided with the first antenna, all or some of the home devices may be replaced with the electronic devices.

A first device and a third device may be home devices or electronic devices that are in an unconfigured state. For example, the first device may include the home device 510, the home device 520, the home device 521, and the home device 530 whose device configuration information is not obtained. The second device may be a home device or an electronic device that stores the device configuration information. For example, the second device may include the electronic device 540, and the home device 510, the home device 520, the home device 521, and the home device 530 after the device configuration information is obtained. First configuration indication information or second configuration indication information may be configuration indication information 2, configuration indication information 3, or configuration indication information 4 described below. Third configuration indication information may be configuration indication information 1, configuration indication information 5, configuration indication information 6, or configuration indication information 7 described below. The first authentication information or the second authentication information may be authentication information 2, authentication information 3, or authentication information 4 described below, and a first communication connection or a second communication connection may be a communication connection 1, a communication connection 2, or a communication connection 3 described below.

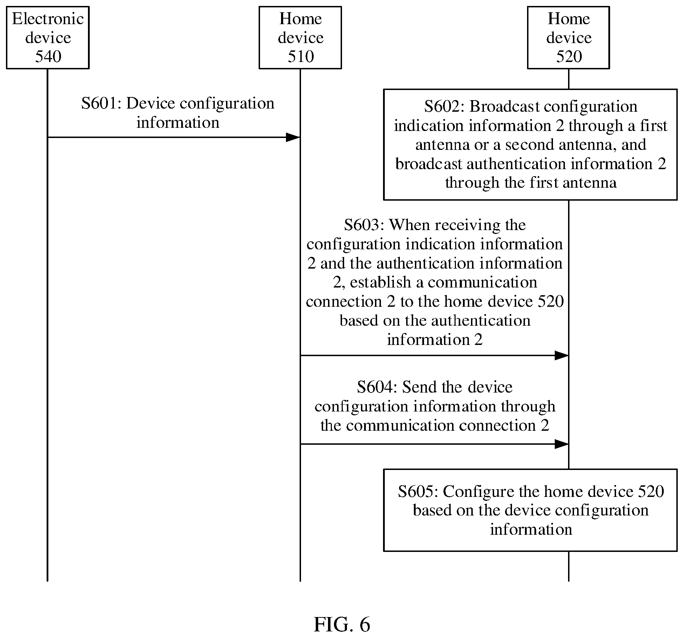

FIG. 6 is a flowchart of a device configuration method according to an embodiment of this application. It should be noted that the method is not limited to the specific sequence in FIG. 6 and described below. It should be understood that, in other embodiments, sequences of some steps in the method may be exchanged according to an actual requirement, or some steps in the method may be omitted or deleted. The method includes the following steps.

S601: A home device 510 receives device configuration information from an electronic device 540.

Optionally, the electronic device 540 may publish a device configuration service through Wi-Fi awareness, which includes sending configuration indication information 1 through broadcast. The configuration indication information 1 may be used to describe the device configuration service. The home device 510 may subscribe to the configuration service through Wi-Fi awareness. When receiving the configuration indication information 1 through a second antenna, the home device 510 may determine that the electronic device 540 is discovered. Therefore, the home device 510 may broadcast authentication information 1 to the electronic device 540 through a first antenna. When receiving the authentication information 1, the electronic device 540 may indicate the user that an unconfigured home device 510 is discovered, to receive device configuration information submitted by a user. The electronic device 540 may further establish an encrypted communication connection 1 to the home device 510 based on the authentication information 1, and send the device configuration information to the home device 510 through the communication connection 1.

Wi-Fi awareness is referred to as a NAN. Wi-Fi awareness may bypass a transmission control protocol (transmission control protocol, TCP)/internet protocol (Internet Protocol, IP) layer, so that an application layer may directly control a media access control (media access control, MAC) layer, to reduce a communication delay. By using a Wi-Fi awareness technology, communication parties can directly communicate without connecting to a same network device. One party may send one or more discoverable services as a service publisher, and the other party may subscribe to these services as a service subscriber. When the service subscriber enters a Wi-Fi coverage area of the service publisher, the service subscriber may receive a notification of discovering the service, and establish a communication connection to the service publisher for communication.

The authentication information 1 may be used to authenticate another device accessing the home device 510. The authentication information 1 may include a PIN or an AES-based key, for example, an AES128-based key.

It can be learned from the foregoing descriptions that a power of the first antenna is low, and the electronic device 540 can receive the authentication information 1 sent by the home device 510 through the first antenna only when the electronic device 540 is within a first distance threshold range of the home device 510. Therefore, the authentication information 1 can be sent in plaintext through the first antenna. This saves a process of negotiating a key between the home device 510 and the electronic device 540, improves efficiency of obtaining the device configuration information, reduces a possibility of incorrectly connecting to the another device, and improves reliability of obtaining the device configuration information.

Optionally, when receiving the configuration indication information 1 through the second antenna, the home device 510 may send a prompt signal indicating that a distribution network service is discovered, for example, send a voice prompt "Please place a mobile phone within 50 cm of the home device", to prompt a user to move the home device 510 and the electronic device 540 closer to each other.

Optionally, the home device 510 may further send a device identifier of the home device 510 to the electronic device 540, so that a control device more accurately determines that a to-be-connected device is the home device 510.

Optionally, the home device 510 may be configured based on the device configuration information. When the device configuration information includes network configuration information, the home device 510 may be linked to a network home device 550 based on the network configuration information. When the device configuration information includes account registration information, the home device 510 may register with a server 560 based on the account registration information. When the device configuration information includes a device control instruction and/or a device status parameter, the home device 510 may be operated based on the device control instruction and/or the device status parameter.

It should be noted that, if the electronic device 540 is a device such as a mobile phone or a computer that can control the home device 510, when the home device 510 is successfully registered, the electronic device 540 further sends, to the electronic device 540, prompt information indicating successful registration. When the home device 510 successfully establishes the communication connection 1 to the electronic device 540, the home device 510 may send device status information of the home device 510 to a device configuration source 340 through the communication connection 1, and/or receive a device control instruction and/or a device status parameter for the home device 510 through the communication connection 1. In this way, the user can conveniently control the home device 510 before the home device 510 is configured, to improve reliability of controlling the home device 510.

It should be noted that the home device 510 may alternatively obtain the device configuration information from the electronic device 540 in another manner. For example, the home device 510 may switch to a soft AP mode. The electronic device 540 is connected to a home device 510 as a soft AP and sends the device configuration information to the home device 510. For another example, the home device 510 may alternatively obtain the device configuration information from the electronic device 540 in a manner similar to that described below in which a home device 520 obtains the device configuration information from the home device 510. A manner in which the device 1 obtains the device configuration information from a control device is not specifically limited in this embodiment of this application.

It should be further noted that, the home device 510 may perform step S602 when obtaining the device configuration information, to further improve efficiency of obtaining the device configuration information by another unconfigured device, or may perform step S402 when successfully completing configuration based on the device configuration information (for example, successfully connecting to the network home device 550 based on the network configuration information, and successfully registering with the server 560 based on the account registration information), to reduce a possibility of sending incorrect device configuration information.

S602: The home device 520 broadcasts configuration indication information 2 through the second antenna or the first antenna, and broadcasts authentication information 2 through the first antenna.

The configuration indication information 2 indicates that the home device 520 is in an unconfigured state, and the authentication information 2 is used to authenticate another device that accesses the home device 520.

To help the home device 510 perceive an unconfigured home device 520 still existing around the home device 510, the home device 520 may broadcast the configuration indication information 2. In addition, because the configuration indication information 2 indicates that the home device 520 is in the unconfigured state, the configuration indication information 2 may be sent through a second antenna with a high transmit power, or may be sent through a first antenna with a low transmit power. Because the authentication information 2 has a high security requirement, the authentication information 2 may be sent through the first antenna with the low transmit power, to ensure that only a device within a first distance threshold range of the home device 520 receives to-be-authenticated information 2, so as to reduce a possibility of misconfiguration. In addition, because the first distance threshold is small, it may indicate a secure transmission distance. In this case, when the authentication information 2 is transmitted within the first distance threshold, the transmission process may also be considered secure. Therefore, the authentication information 2 may be transmitted in plaintext, to save a process of negotiating a key between the home device 520 and the home device 510, and improve efficiency of configuring a device.

When the home device 520 broadcasts the configuration indication information 2 through the second antenna with the high transmit power, the home device 510 within a larger distance range can perceive the home device 520. This improves reliability of perceiving the home device 520 by the home device 510.

Optionally, the home device 520 may broadcast the configuration indication information 2 and the authentication information 2 based on a Wi-Fi protocol, a Bluetooth protocol, or a Zigbee protocol. In other words, the configuration indication information 2 and the authentication information 2 may be carried in a frame (for example, a management frame or a control frame) based on the Wi-Fi protocol or the Bluetooth protocol.

Optionally, the configuration indication information 2 may be carried in a beacon (beacon) frame based on the Wi-Fi protocol, the Bluetooth protocol, or the Zigbee protocol. The configuration indication information 2 may be represented by a preset character string 1 in a data bit (frame body) of the beacon frame. For example, the preset character string 1 may be four ones, and the preset character string 1 may be at the end of an SSID. If the last four bits of an SSID sent by the home device 520 are all 1, it may indicate that the home device 520 is currently in the unconfigured state.

It should be noted that the home device 520 may switch to the soft AP mode to generate the beacon frame, or may not switch to the soft AP mode, but directly invoke a beacon frame function to generate the beacon frame. Certainly, the beacon frame may alternatively be generated in another manner. A manner of generating the beacon frame is not specifically limited in this embodiment of this application.

It should be further noted that, in this embodiment of this application, other data that needs to be sent through broadcast may alternatively be carried in the beacon frame based on Wi-Fi, Bluetooth, or Zigbee.

Optionally, if the home device 520 sends the configuration indication information 2 and the authentication information 2 through the first antenna, the configuration indication information 2 and the authentication information 2 may be carried in a same packet.

In addition, in some embodiments, the home device 520 may alternatively be configured not to send the authentication information 2.

S603: When receiving the configuration indication information 2 and the authentication information 2, the home device 510 establishes a communication connection 2 to the home device 520 based on the authentication information 2.

The home device 510 may receive the configuration indication information 2 and the authentication information 2 through the second antenna. When the home device 510 receives the configuration indication information 2, it may be determined that the home device 520 in the unconfigured state is detected. Therefore, the home device 510 may send a communication connection request 1 to the home device 520, to establish the communication connection 2 to the home device 520 through the communication connection request 1. The communication connection request 1 may carry the authentication information 2.

Because the authentication information 2 is sent by the home device 520 through the first antenna with the low transmit power, when the home device 510 receives the authentication information 2, it may be determined that a current distance between the home device 510 and the home device 520 is less than or equal to the first distance threshold. Further, the home device 510 may establish an encrypted communication connection to the home device 520. In addition, because the home device 510 establishes a communication connection to the home device 520 only after receiving the configuration indication information 2 and the authentication information 2, a waste of system resources, such as a network resource and a computing resource, of the home device 510 may be reduced.

Optionally, the home device 510 may establish the communication connection 2 to the home device 520 based on the Wi-Fi protocol, the Bluetooth protocol, or the Zigbee protocol. For example, the home device 510 may establish the communication connection 2 based on the NAN.

S604: The home device 510 sends the device configuration information to the home device 520 through the communication connection 2.

When the home device 510 communicates with the home device 520 through the communication connection 2, if the communication connection 2 is encrypted, the home device 510 may send communication data (including the device configuration information) to the home device 520 through the second antenna or the first antenna, and receive, through the second antenna, communication data sent by the home device 520. If the communication connection 2 is not encrypted, the home device 510 may send communication data to the home device 520 through the first antenna, and receive, through the second antenna, communication data sent by the home device 520.

It should be noted that, because the communication connection 2 is established based on the authentication information 2 sent through the first antenna, the home device 510 may quickly send the device configuration information to the home device 520 through the second antenna with the high transmit power.

S605: Configure the home device 520 based on the device configuration information.

It should be noted that a manner in which the home device 520 is configured based on the device configuration information may be the same as a manner in which the home device 510 is configured based on the device configuration information in S401. Details are not described herein again. For example, the home device 520 may be connected to the network home device 550 based on the network configuration information, and register with the server 560 based on the account registration information.

It should be noted that, when receiving the device configuration information, the home device 520 may perform operations similar to those of the home device 510 in S602 to S604, to continue to provide the device configuration information for another unconfigured device. For example, there is still an unconfigured home device 530. In this case, the home device 520 performs operations similar to S602: broadcasting configuration indication information 3 through the second antenna or the first antenna, and broadcasting authentication information 3 through the first antenna; the home device 520 performs operations similar to S603 and S604: upon receiving the configuration indication information 3 and the authentication information 3, establishing a communication connection 3 to the home device 530 based on the authentication information 3, and sending the device configuration information to the home device 530 through the communication connection 3; and the home device 530 performs an operation similar to S605: completing configuration based on the device configuration information.

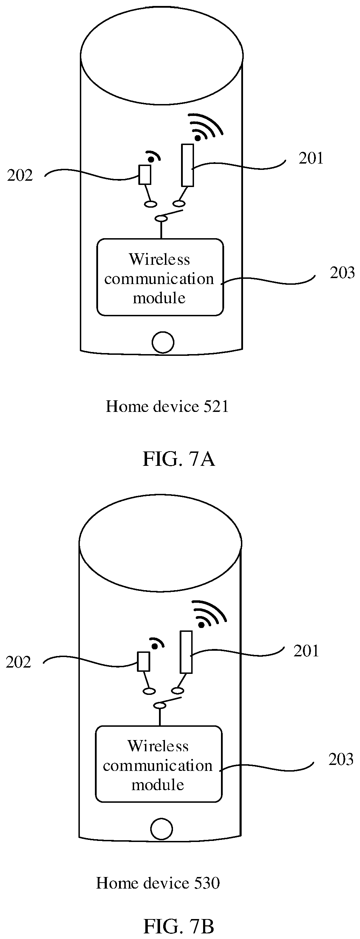

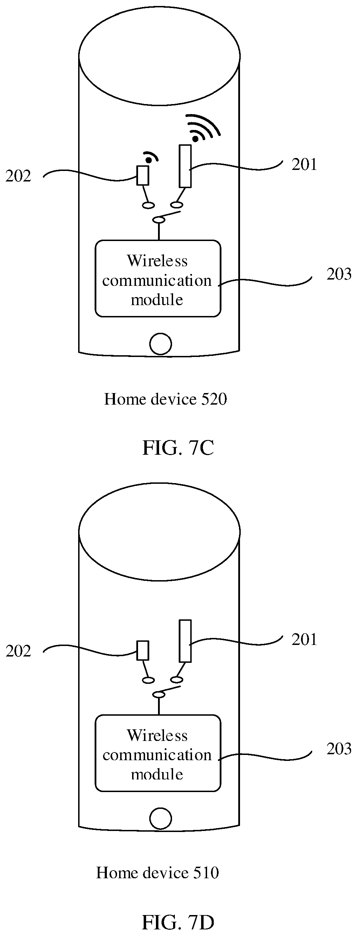

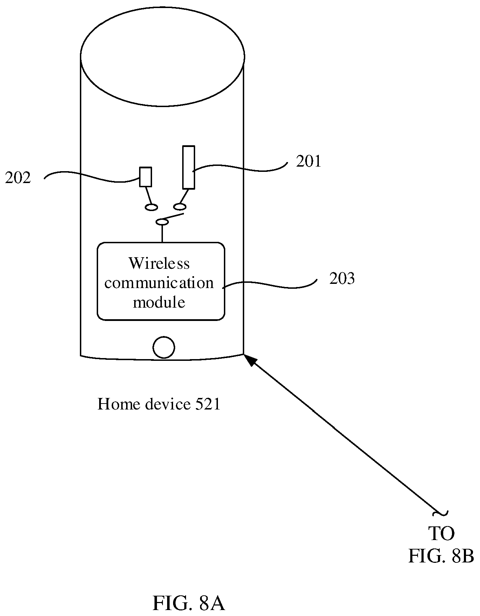

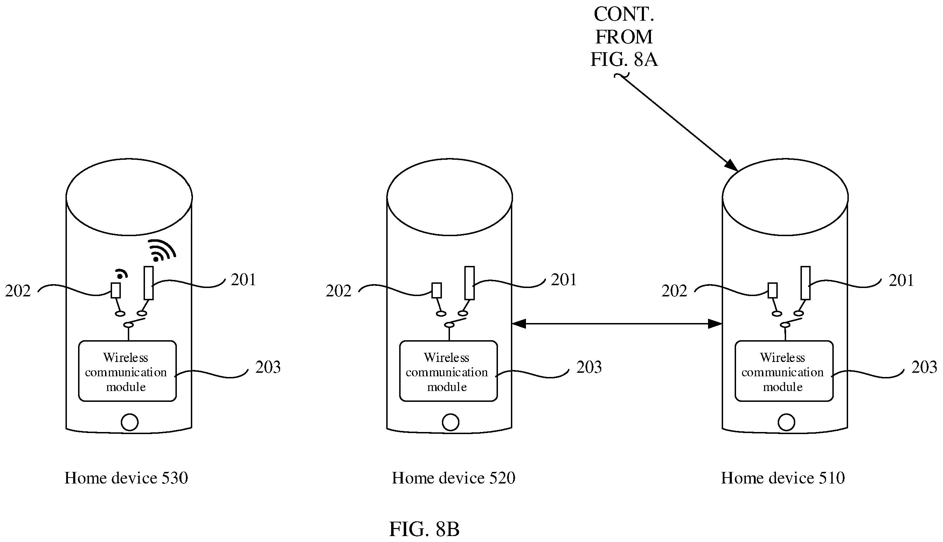

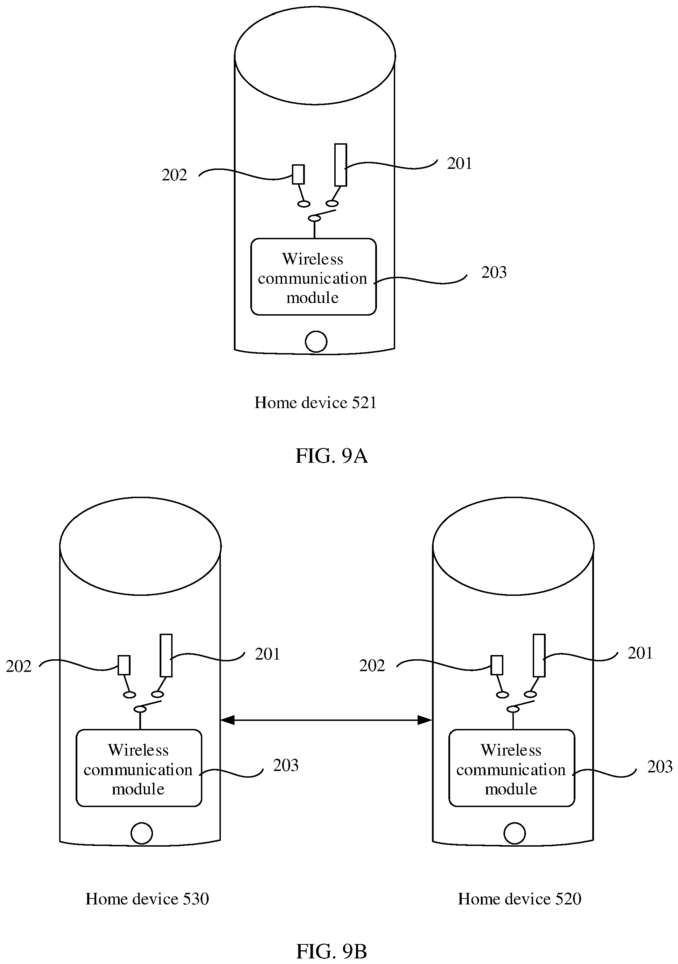

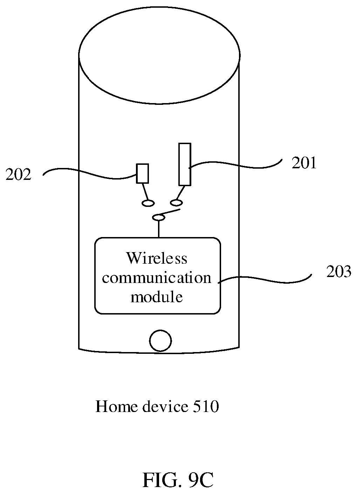

FIG. 7A to FIG. 9C are schematic diagrams of device states according to an embodiment of this application. Refer to FIG. 7A, FIG. 7B, FIG. 7C, and FIG. 7D. The home device 510 obtains the device configuration information. The home device 520, a home device 521, and the home device 530 are in the unconfigured state. The home device 520 broadcasts the configuration indication information 2 through the second antenna or the first antenna, and broadcasts the authentication information 2 through the first antenna. The home device 530 broadcasts the configuration indication information 3 through the second antenna or the first antenna, and broadcasts the authentication information 3 through the first antenna. The home device 521 broadcasts configuration indication information 4 through the second antenna or the first antenna, and broadcasts authentication information 4 through the first antenna. Refer to FIG. 8A and FIG. 8B. Because a distance between the home device 510 and the home device 520 and a distance between the home device 510 and the home device 521 are both less than or equal to the first distance threshold, and a distance between the home device 510 and the home device 530 is greater than the first distance threshold, the home device 510 may receive the configuration indication information 2 and the authentication information 2 that are sent by the home device 520 and the configuration indication information 4 and the authentication information 4 that are sent by the home device 521, but cannot receive the authentication information 3 sent by the home device 530. The home device 510 establishes an encrypted communication connection 2 to the home device 520 based on the authentication information 2, and sends the device configuration information to the home device 520 through the communication connection 2. The home device 520 obtains the device configuration information, and therefore no longer broadcasts the configuration indication information 2 and the authentication information 2. Similarly, the home device 530 may also obtain the device configuration information, and no longer send the configuration indication information 4 and the authentication information 4. Refer to FIG. 9A, FIG. 9B, and FIG. 9C. Because a distance between the home device 520 and the home device 530 is less than or equal to the first distance threshold, the home device 520 may receive the configuration indication information 3 and the authentication information 3 that are sent by the home device 530. The home device 520 establishes the communication connection 3 to the home device 530 based on the authentication information 3, and sends the device configuration information to the home device 530 through the communication connection 3. The home device 530 obtains the device configuration information, and therefore no longer broadcasts the configuration indication information 3 and the authentication information 3.

It should be noted that the configuration indication information 3 indicates that the home device 530 is in the unconfigured state, and the configuration indication information 4 indicates that the home device 521 is in the unconfigured state. A form of the configuration indication information 3 and the configuration indication information 4 may be the same as a form of the configuration indication information 2. A form of the authentication information 3 and the authentication information 4 may be the same as a form of the authentication information 2.

In this embodiment of this application, the home device 510 may receive the device configuration information from the electronic device 540. If there is still at least one device, the device is provided with the first antenna, the home device 510 is provided with the second antenna, and a transmit power of the second antenna is greater than a power threshold 1 that is greater than a transmit power of the first antenna. A longest transmit distance of the first antenna is the first distance threshold. For example, the at least one device is the home device 520 and the home device 521. The home device 510 may send the device configuration information to the at least one device within the first distance threshold of the home device 510 (that is, a distance between the device and the home device 510 is less than or equal to the first distance threshold). Similarly, the home device 520 and the home device 521 may alternatively send the device configuration information to more devices in the foregoing manner, so that the device configuration information can be quickly sent to other devices, and the user does not need to configure the devices one by one. This greatly improves configuration efficiency. In addition, because the home device 510 establishes a communication connection to the home device 520 only after receiving the configuration indication information 2 and the authentication information 2, a waste of system resources of the home device 510 may be reduced.

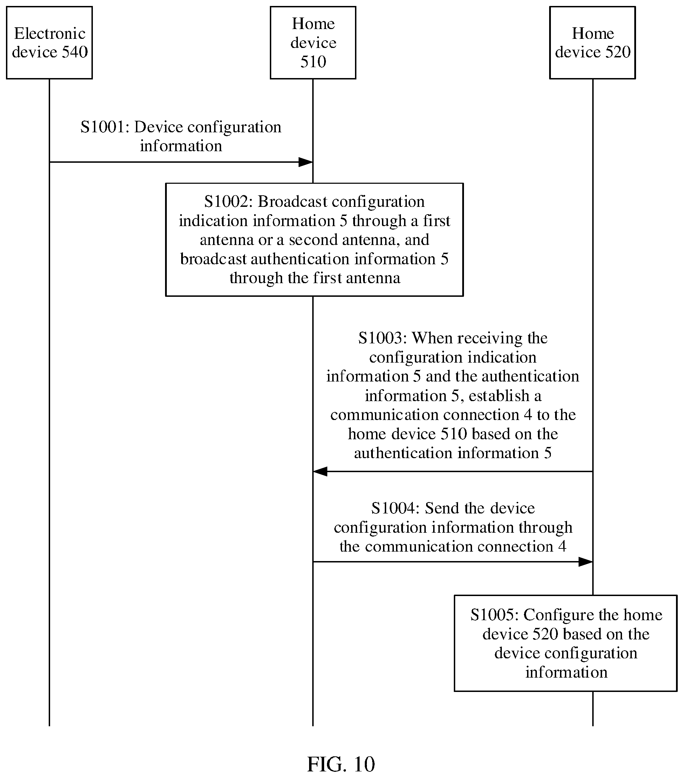

FIG. 10 is a flowchart of another device configuration method according to an embodiment of this application. It should be noted that the method is not limited to the specific sequence in FIG. 10 and described below. It should be understood that, in other embodiments, sequences of some steps in the method may be exchanged according to an actual requirement, or some steps in the method may be omitted or deleted. The method includes the following steps.

S1001: The home device 510 receives device configuration information from the electronic device 540.

S1001 may be the same as S601. Details are not described herein again.

S1002: The home device 510 broadcasts configuration indication information 5 through a second antenna or a first antenna, and broadcasts authentication information 5 through the first antenna.

The configuration indication information 5 may be used to trigger the home device 520 to receive the device configuration information.

To facilitate another unconfigured home device 520 around to perceive that the home device 510 obtains the device configuration information, so that the home device 520 is triggered to receive the device configuration information, the device 1 may broadcast the configuration indication information 5, and broadcast the authentication information 5 through a first antenna with a low transmit power, to ensure security of the authentication information 5.

When the home device 510 broadcasts the configuration indication information 5 through a second antenna with a high transmit power, the home device 520 within a larger distance range can perceive the home device 510. This improves reliability of perceiving the home device 510 by the home device 520.

Optionally, the home device 510 may broadcast the configuration indication information 5 and the authentication information 5 based on a Wi-Fi protocol, a Bluetooth protocol, or a Zigbee protocol. In other words, the configuration indication information 5 and the authentication information 5 may be carried in a data frame, a management frame, or a control frame based on the Wi-Fi protocol or the Bluetooth protocol.

A form of the configuration indication information 5 may be the same as a form of the configuration indication information 2. The configuration indication information 5 may be represented by a preset character string 2 in a data bit of a beacon frame. For example, the preset character string 2 may be four zeros, and the preset character string 2 may be at the end of an SSID. In this case, if the last four bits of an SSID sent by the home device 510 are all 0, it may indicate that the home device 510 obtains the device configuration information, and therefore triggers the home device 520 to receive the device configuration information.

In addition, in some embodiments, the home device 510 may alternatively be configured not to broadcast the authentication information 5.

It should be noted that S802 may be similar to S402. Details are not described herein again.

S1003: When receiving the configuration indication information 5 and the authentication information 5, the home device 520 establishes a communication connection 4 to the home device 510 based on the authentication information 5.

The home device 520 may receive the configuration indication information 5 and the authentication information 5 through the second antenna. When the home device 520 receives the configuration indication information 5 and the authentication information 5, it may be determined that the home device 510 that obtains the device configuration information is detected. Therefore, the home device 520 may send a communication connection establishment request 2 to the home device 510, to establish the communication connection 4 to the home device 510. The authentication information 5 may be carried in the communication connection establishment request 2.

Optionally, the home device 520 may establish the communication connection 2 to the home device 510 based on the Wi-Fi protocol, the Bluetooth protocol, or the Zigbee protocol.

Because the authentication information 5 is sent by the home device 510 through a first antenna with a low transmit power, when the home device 520 receives the authentication information, it may be determined that a current distance between the home device 520 and the home device 510 is less than or equal to a first distance threshold. Further, the home device 520 may establish the communication connection 4 to the home device 5100. In addition, because the home device 510 sends the configuration indication information 5 and the authentication information 5 when obtaining the device configuration information, and the home device 520 establishes the communication connection 4 to the home device 510 only when receiving the configuration indication information 5 and the authentication information 5, when the user configures a plurality of devices such as the home device 510 and the home device 520, the user may first configure one device (for example, the home device 510). Then, when the home device 510 obtains the device configuration information, the user may sequentially trigger other devices such as the home device 520 to obtain the device configuration information, so as to reduce waste of a system resource of a device that is beyond the first distance threshold from the home device 510 at an initial configuration stage.

S1004: The home device 510 sends the device configuration information to the home device 520 through the communication connection 4.

Optionally, to save system resources of the home device 510, the home device 510 may perform S1002 at intervals of preset duration 1. If the home device 510 establishes a communication connection to another device by performing S1002 and S1003, the home device 510 may perform S1004. If the home device 510 does not establish a communication connection to another device within preset duration 2 after starting to perform S1002, the home device 510 may stop performing S1002. Alternatively, the home device 510 may start timing when performing S1004 for the last time. If the home device 510 does not establish a communication connection to another device within preset duration 3, the home device 510 may stop performing S1002.

S1005: Configure the home device 520 based on the device configuration information.

It should be noted that a manner in which the home device 520 is configured based on the device configuration information may be the same as a manner in which the home device 510 is configured based on the device configuration information in S605. Details are not described herein again.

It should be further noted that S1004 and S1005 may be the same as S604 and S605. Details are not described herein again.

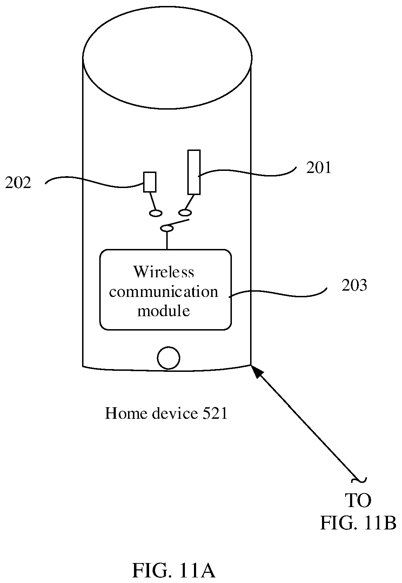

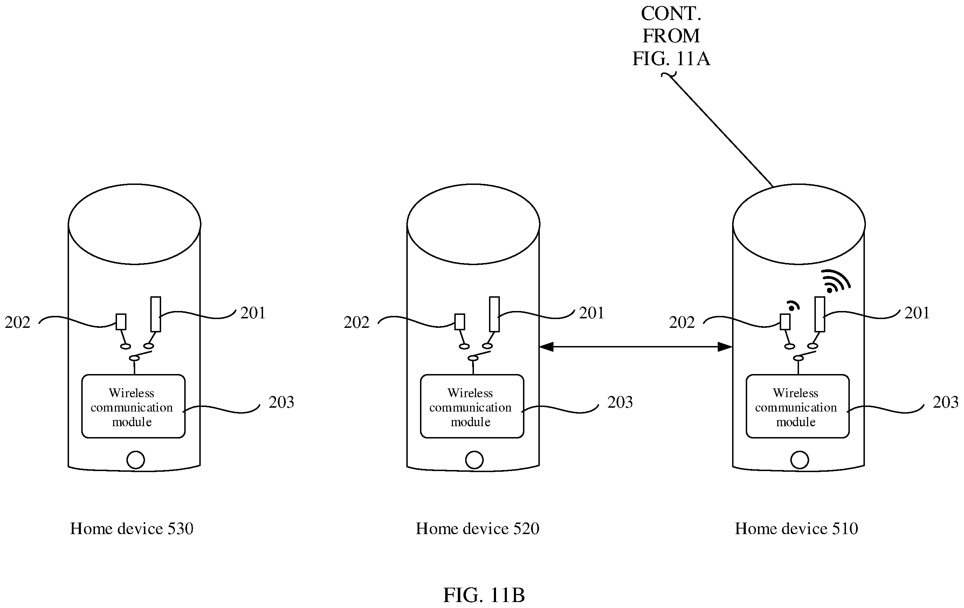

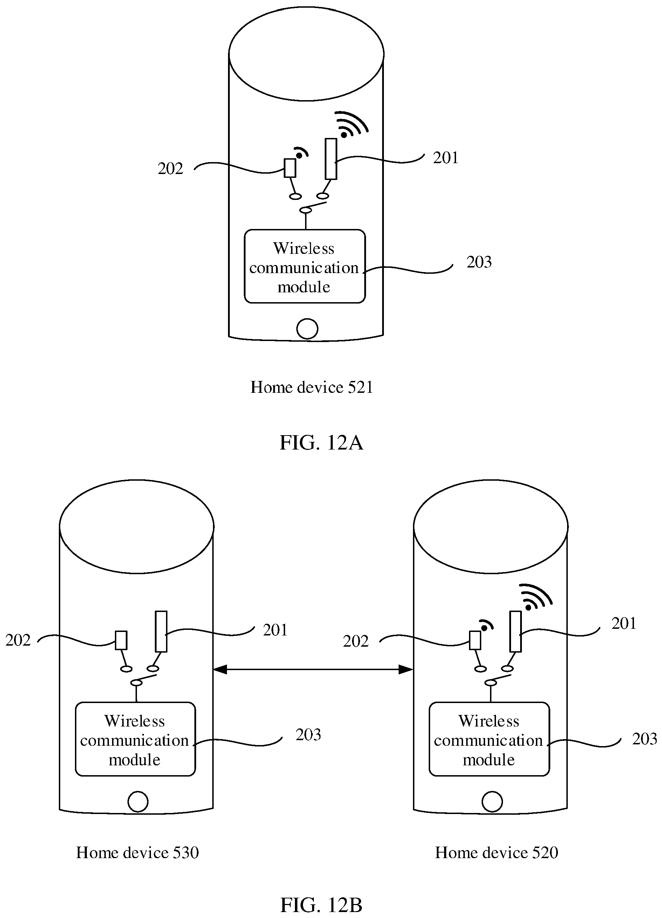

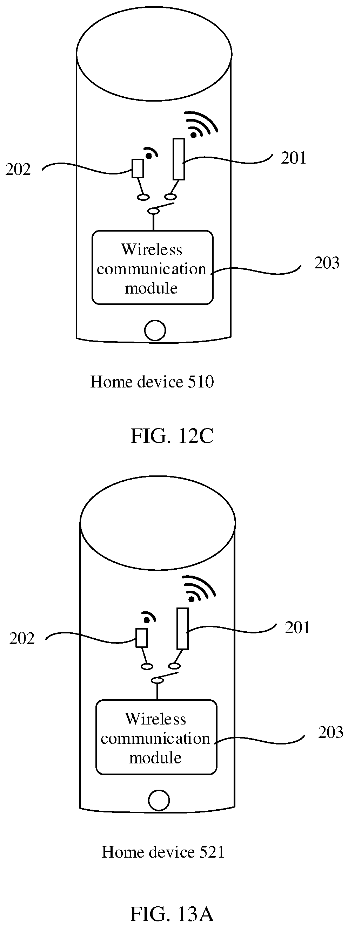

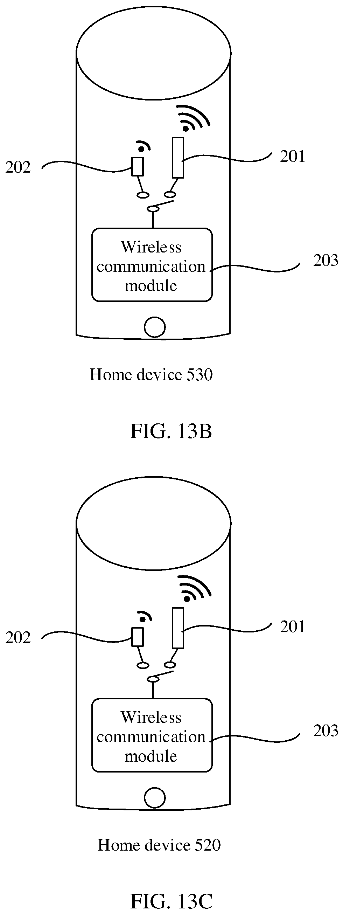

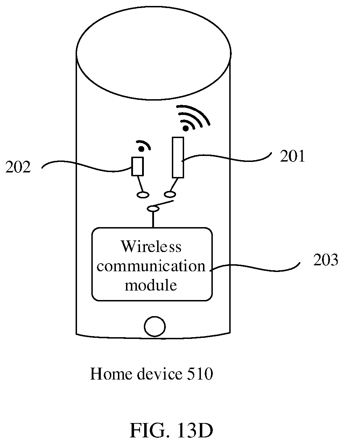

FIG. 11A to FIG. 13D are schematic diagrams of device states according to an embodiment of this application. Refer to FIG. 11A and FIG. 11B. The home device 510 obtains the device configuration information, and therefore may broadcast the configuration indication information 5 and the authentication information 5. Because a distance between the home device 510 and the home device 520 and a distance between the home device 510 and the home device 521 are both less than or equal to the first distance threshold, and a distance between the home device 510 and the home device 530 is greater than the first distance threshold, the home device 520 and the home device 521 may receive the configuration indication information 5 and the authentication information 5, and the home device 530 cannot receive the authentication information 5. The home device 520 and the home device 521 separately establish a communication connection to the home device 510 based on the authentication information 5, to obtain the device configuration information. Refer to FIG. 12A, FIG. 12B, and FIG. 12C. The home device 520 may broadcast configuration indication information 6 and authentication information 6 when obtaining the device configuration information. The home device 521 may broadcast configuration indication information 7 and authentication information 7 when obtaining the device configuration information. Because a distance between the home device 520 and the home device 530 is less than or equal to the first distance threshold, the home device 530 may receive the configuration indication information 6 and the authentication information 6, to establish a communication connection to the home device 520 and receive the device configuration information. Refer to FIG. 13A, FIG. 13B, FIG. 13C, and FIG. 13D. The home device 530 also obtains the device configuration information, and therefore may also broadcast configuration indication information 8 and authentication information 8.

It should be noted that the configuration indication information 6 may be used to trigger the home device 530 to receive the device configuration information. The configuration indication information 7 may be used to trigger another device within a first distance threshold range of the home device 521 to receive the device configuration information. The configuration indication information 8 may be used to trigger another device within a first distance threshold range of the home device 530 to receive the device configuration information. A form of the configuration indication information 6, the configuration information 7, and the configuration information 8 may be the same as a form of the configuration information 5. A form of the authentication information 6, the authentication information 7, and the authentication information 8 may be the same as a form of the authentication information 5.

In this embodiment of this application, the home device 510 may receive the device configuration information from the electronic device 540. If there is still at least one device, the device is provided with the second antenna, the home device 510 is provided with the first antenna, and a transmit power of the second antenna is greater than the power threshold 1 that is greater than a transmit power of the first antenna. A longest transmit distance of the first antenna is the first distance threshold. For example, the at least one device is the home device 520 and the home device 521. The home device 510 may send the device configuration information to the at least one device within the first distance threshold of the home device 510 (that is, a distance between the device and the home device 510 is less than or equal to the first distance threshold). Similarly, the home device 520 and the home device 521 may alternatively send the device configuration information to more devices in the foregoing manner, so that the device configuration information can be quickly sent to other devices, and the user does not need to configure the devices one by one. This greatly improves configuration efficiency. In addition, because the home device 510 sends the configuration indication information 5 and the authentication information 5 when obtaining the device configuration information, and the home device 520 establishes the communication connection to the home device 510 only when receiving the configuration indication information 5 and the authentication information 5, when the user configures a plurality of devices such as the home device 510 and the home device 520, the user may first configure one device (for example, the home device 510). Then, when the home device 510 obtains the device configuration information, the user may sequentially trigger other devices such as the home device 520 to obtain the device configuration information, so as to reduce waste of a system resource of a device that is beyond the first distance threshold from the home device 510 at an initial configuration stage.

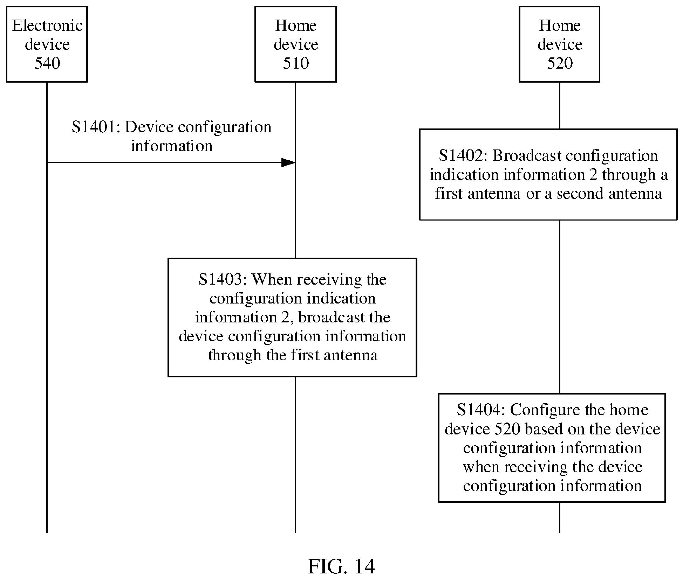

FIG. 14 is a flowchart of still another device configuration method according to an embodiment of this application. It should be noted that the method is not limited to the specific sequence in FIG. 14 and described below. It should be understood that, in other embodiments, sequences of some steps in the method may be exchanged according to an actual requirement, or some steps in the method may be omitted or deleted. The method includes the following steps.

S1401: The home device 510 receives device configuration information from the electronic device 540.

S1401 may be the same as S601. Details are not described herein again.

S1402: The home device 520 broadcasts the configuration indication information 2 through a second antenna or a first antenna.

It should be noted that a manner in which the home device 520 broadcasts the configuration indication information 2 through the second antenna or the first antenna may be the same as a manner in which the home device 520 broadcasts the configuration indication information 2 through the second antenna or the first antenna in S602. Details are not described herein again.

In addition, in some embodiments, the home device 520 may also be configured to broadcast the configuration indication information 2. In other words, S 1402 is an optional step.

Optionally, the home device 520 may broadcast the configuration indication information 2 and the authentication information 2 based on a Wi-Fi protocol, a Bluetooth protocol, or a Zigbee protocol.

S1403: When receiving the configuration indication information 2, the home device 510 broadcasts the device configuration information through the first antenna.

When the home device 510 detects an unconfigured home device 520 around the home device 510, there may be more unconfigured devices around the home device 510. Therefore, the home device 510 may broadcast the device configuration information through the first antenna, so that all devices within a first distance threshold of the home device 510 can obtain the device configuration information. This improves configuration efficiency.

It should be noted that the home device 510 may broadcast the device configuration information by using one or more packets.

Optionally, the home device 510 may broadcast the device configuration information based on the Wi-Fi protocol, the Bluetooth protocol, or the Zigbee protocol.

In addition, in some embodiments, because the first distance threshold is small, it may indicate a secure communication distance. Therefore, the device 1 may broadcast the device configuration information through the first antenna when obtaining the device configuration information from the electronic device 540. Alternatively, the device 1 may broadcast the device configuration information through the first antenna when configuration succeeds based on the device configuration information, and does not detect whether an unconfigured device still exists. This simplifies a device configuration process and further improves configuration efficiency.

S1404: Configure the home device 520 based on the device configuration information when receiving the device configuration information.

It should be noted that a manner in which the home device 520 is configured based on the device configuration information may be the same as a manner in which the home device 510 is configured based on the device configuration information in S605. Details are not described herein again.

In this embodiment of this application, the home device 510 may receive the device configuration information from the electronic device 540. If there is still at least one device, the home device 510 is provided with the first antenna, the device is provided with the second antenna, and a transmit power of the second antenna is greater than the power threshold 1 that is greater than a transmit power of the first antenna. A longest transmit distance of the first antenna is the first distance threshold. For example, the at least one device is the home device 520 and the home device 521. The home device 510 may send the device configuration information to the at least one device within the first distance threshold of the home device 510 (that is, a distance between the device and the home device 510 is less than or equal to the first distance threshold). Similarly, the home device 520 and the home device 521 may alternatively send the device configuration information to more devices in the foregoing manner, so that the device configuration information can be quickly sent to other devices, and the user does not need to configure the devices one by one. This greatly improves configuration efficiency. In addition, the home device 510 may broadcast the device configuration information through the first antenna, so that all devices within the first distance threshold of the home device 510 can obtain the device configuration information. This improves configuration efficiency.

It should be noted that the device configuration methods provided in FIG. 6, FIG. 10, and FIG. 14 may be combined.

In some embodiments, after S601, S1001, or S1401, the home device 510 may perform at least one of the following: performing S1002 to actively notify the unconfigured home device 520 and the unconfigured home device 521 to receive the device configuration information; performing S1404 to actively send the device configuration information to a possible unconfigured device; performing S603 to receive the configuration indication information 2 and the authentication information 2 of the unconfigured home device 520, so as to establish a communication connection to the unconfigured home device 520, and send the device configuration information to the home device 520. The unconfigured home device 520 may perform at least one of the following: performing S602 or S1402 to actively indicate a possible home device 510 obtaining the device configuration information, that the device is currently in the unconfigured state; and performing S 1003 to receive the configuration indication information 5 and the authentication information 5 that are sent by the home device 510, and establishing a communication connection to the home device 510.

In some embodiments, in S602, the home device 520 may not broadcast the authentication information 2. Instead, similar to S1003, the home device 520 obtains the authentication information 5 of the home device 510, and establishes the communication connection 4 to the home device 510 based on the authentication information 5.

In some embodiments, in S1002, the home device 510 may not broadcast the authentication information 5. Instead, similar to S603, the home device 510 obtains the authentication information 2 sent by the home device 520, and establishes the communication connection 2 to the home device 520 based on the authentication information 2.

In some embodiments, in S1002, the home device 510 may broadcast and send the configuration indication information 1 through the second antenna or the first antenna, that is, publish a device configuration service through Wi-Fi awareness. In this case, the home device 520 subscribes to the device configuration service, and broadcasts the authentication information 2 through the first antenna when receiving the configuration indication information. The home device 510 obtains the authentication information 2 sent by the home device 520, and establishes the communication connection 2 to the home device 520 based on the authentication information 2.

In conclusion, the device configuration method provided in this embodiment of this application may include four phases.

Phase 1: The home device 510 receives the device configuration information from the electronic device 540.

Phase 2: Mutually discovering the home device 510 and the home device 520 includes at least one of the following: The home device 510 broadcasts the configuration indication information 1, and the home device 520 receives the configuration indication information 1, to discover the home device 510; the home device 510 sends the configuration indication information 5, and the home device 520 receives the configuration indication information 5, to discover the home device 510; the home device 520 broadcasts the configuration indication information 2, and the home device 510 receives the configuration indication information 2, to discover the home device 520. The home device 510 and the home device 520 perform at least one of the foregoing operations to discover each other, so that reliability and efficiency of perceiving the third device by the first device can be improved, and then the device configuration information such as the network configuration information is conveniently provided for the third device.

Phase 3: That the home device 510 establishes the communication connection to the home device 520 includes any one of the following: The home device 510 establishes the communication connection 2 based on the authentication information 2 of the home device 520; and the home device 520 establishes the communication connection 4 based on the authentication information 5 of the home device 510. In other words, sending authentication information and establishing a communication connection are not limited in this embodiment of this application. As long as the authentication information is sent through the first antenna, it can be ensured that the home device 510 can securely send the device configuration information to the home device 520 within the first distance threshold.

Phase 4: The home device 510 sends the device configuration information to the home device 520. The home device 510 may send the device configuration information to the home device 520 through the communication connection 2 or the communication connection 4. If the home device 510 discovers the home device 520 in phase 2, phase 3 may be omitted, and the home device 510 may broadcast the device configuration information when discovering the home device 520. Alternatively, both phase 2 and phase 3 may be omitted. The home device 510 broadcasts the device configuration information when phase 1 is completed, to omit at least one step of the following: The home device 510 perceives the home device 520 within the first distance threshold range, and the home device 510 establishes a communication connection to the home device 520. The further improves configuration efficiency.

When the home device 510 may send the device configuration information to the home device 520 through the communication connection 2 or the communication connection 4, the device configuration information may be sent through the first antenna or the second antenna. In addition, when the device configuration information is sent through the second antenna with the high power, efficiency of sending the device configuration information can be improved. It can also be ensured that when the home device 510 obtains authentication information of the home device 520 or the home device 520 obtains authentication information of the home device 510, even if the distance between the home device 510 and the home device 520 is greater than the first distance threshold, the home device 510 may send the device configuration information to the home device 520 as long as the distance is less than or equal to the second distance threshold. This improves reliability of sending the device configuration information.

Aperson skilled in the art may clearly understand that, for the purpose of convenient and brief description, division into the foregoing function units or modules is merely used as an example for description. In actual application, the foregoing functions may be allocated to different function units or modules for implementation based on a requirement. That is, an inner structure of the apparatus is divided into different function units or modules to implement all or some of the functions described above. Function units and modules in embodiments may be integrated into one processing unit, or each of the units may exist alone physically, or two or more units may be integrated into one unit. The integrated unit may be implemented in a form of hardware, or may be implemented in a form of a software function unit. In addition, specific names of the function units and modules are merely for ease of distinguishing between the function units and modules, but are not intended to limit the protection scope of this application. For a specific working process of the units or modules in the foregoing system, refer to a corresponding process in the foregoing method embodiments. Details are not described herein again.

Based on a same inventive concept, an embodiment of this application further provides a device. The device may include a memory and a processor. The memory is configured to store a computer program. The processor is configured to perform the method described in the foregoing method embodiments when invoking the computer program.

The device provided in this embodiment may perform operations performed by the home device 510 and/or the home device 520 in the foregoing method embodiments in FIG. 6, FIG. 10, and FIG. 14. Implementation principles and technical effects are similar. Details are not described herein again.

Based on a same inventive concept, an embodiment of this application further provides a chip system. The chip system includes a processor, the processor is coupled to a memory, and the processor executes a computer program stored in the memory, to implement the method according to any one of the first aspect or the implementations of the first aspect.

The chip system may be a single chip or a chip module including a plurality of chips.

An embodiment of this application further provides a computer-readable storage medium. The computer-readable storage medium stores a computer program. When the computer program is executed by a processor, the method in the foregoing method embodiments is implemented.

An embodiment of this application further provides a computer program product. When the computer program product runs on a device, the device is enabled to perform the method in the foregoing method embodiments.

When the foregoing integrated unit is implemented in the form of a software functional unit and sold or used as an independent product, the integrated unit may be stored in a computer-readable storage medium. Based on such an understanding, all or some of the processes of the method in embodiments of this application may be implemented by a computer program instructing related hardware. The computer program may be stored in a computer-readable storage medium. When the computer program is executed by a processor, steps of the foregoing method embodiments may be implemented. The computer program includes computer program code. The computer program code may be in a source code form, an object code form, an executable file form, some intermediate forms, or the like. The computer-readable storage medium may include at least any entity or apparatus that can carry computer program code to a photographing apparatus/device, a recording medium, a computer memory, a read-only memory (read-only memory, ROM), a random access memory (random access memory, RAM), an electrical carrier signal, a telecommunication signal, and a software distribution medium, for example, a USB flash drive, a removable hard disk, a magnetic disk, or an optical disk. In some jurisdictions, the computer-readable medium cannot be the electrical carrier signal or the telecommunications signal according to legislation and patent practices.

In the foregoing embodiments, descriptions of embodiments have respective focuses. For a part that is not described in detail or recorded in an embodiment, refer to related descriptions in other embodiments.

A person of ordinary skill in the art may be aware that the units and algorithm steps described with reference to the examples in embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In embodiments provided in this application, it should be understood that the disclosed apparatus/device and method may be implemented in other manners. For example, the described apparatus/device embodiment is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

It should be understood that, when used in the specification and the appended claims of this application, the term "include" indicates presence of the described features, entireties, steps, operations, elements, and/or components, but does not exclude presence or addition of one or more other features, entireties, steps, operations, elements, components, and/or sets thereof.

It should also be understood that the term "and/or" used in the specification and the appended claims of this application refers to any combination and all possible combinations of one or more associated listed items, and includes these combinations.

As used in the specification and the appended claims of this application, according to the context, the term "if" may be interpreted as "when" or "once" or "in response to determining" or "in response to detecting". Similarly, according to the context, the phrase "if it is determined that" or "if (a described condition or event) is detected" may be interpreted as a meaning of "once it is determined that" or "in response to determining" or "once (a described condition or event) is detected" or "in response to detecting (a described condition or event)".

In addition, in the descriptions of the specification and claims of this application, the terms "first", "second", "third", and the like are merely intended for a purpose of differentiated description, but shall not be understood as an indication or an implication of relative importance.

Reference to "an embodiment", "some embodiments", or the like described in the specification of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

Finally, it should be noted that the foregoing embodiments are merely intended to describe the technical solutions of this application, other than limiting this application. Although this application is described in detail with reference to the foregoing embodiments, a person of ordinary skill in the art should understand that the technical solutions described in the foregoing embodiments may still be modified, or some or all of the technical features thereof may be equivalently replaced. Although the invention has been explained in relation to its preferred embodiment(s) as mentioned above, it is to be understood that many other possible modifications and variations can be made without departing from the scope of the present invention, which is defined by the claims.

## Claims

1. A device configuration method, wherein the method comprises:
receiving, by a first device, network configuration information from a second device; and
sending, by the first device, the network configuration information to at least one third device, wherein the network configuration information is used to connect the first device and the at least one third device to a network device, any third device is provided with a first antenna, the first device is provided with a second antenna, a transmit power of the first antenna is less than a first power threshold, a longest transmit distance of the first antenna is a first distance threshold which is less than or equal to 1 meter, and a transmit power of the second antenna is greater than the first power threshold,
wherein before the sending, by the first device, the network configuration information to at least one third device, the method further comprises:
receiving, by the first device, first authentication information broadcast by the any third device through the first antenna; and
establishing, by the first device, a first communication connection to the any third device based on the first authentication information; and
the sending, by the first device, the network configuration information to at least one third device comprises:
sending, by the first device, the network configuration information to the at least one third device based on the first communication connection.

2. The method according to claim 1, wherein before the sending, by the first device, the network configuration information to at least one third device, the method further comprises:
receiving, by the first device, first configuration indication information broadcast by the any third device, wherein the first configuration indication information indicates that the any third device is in an unconfigured state; and
determining, by the first device based on the first configuration indication information, that the any third device is in the unconfigured state.

3. The method according to claim 1, wherein one of the first device and the second device is provided with the first antenna, the other is provided with the second antenna, and before the receiving, by the first device, network configuration information from the second device, the method further comprises:
broadcasting, by the first device, second configuration indication information to the second device, wherein the second configuration indication information indicates that the first device is in an unconfigured state; and
after the receiving, by a first device, network configuration information from a second device, the method further comprises:
connecting the first device to the network device based on the network configuration information.

4. The method according to claim 1 or 2, wherein before the sending, by the first device, the network configuration information to at least one third device, the method further comprises:
broadcasting, by the first device, third configuration indication information to the at least one third device, wherein the third configuration indication information is used to trigger the at least one third device to receive the network configuration information.

5. The method according to any one of claims 1 to 4, wherein the first device is provided with the first antenna, and before the receiving, by the first device, network configuration information from the second device, the method further comprises:
broadcasting, by the first device, second authentication information to the second device through the first antenna, wherein the second authentication information is used by the second device to establish a second communication connection to the first device; and
the receiving, by a first device, network configuration information from a second device comprises:
receiving, by the first device based on the second communication connection, the network configuration information sent by the second device.

6. The method according to any one of claims 1 to 4, wherein the first device is provided with the first antenna, and the sending, by the first device, the network configuration information to at least one third device comprises:
broadcasting, by the first device, the network configuration information to the at least one third device through the first antenna.

7. The method according to any one of claims 1 to 6, wherein the network configuration information comprises a device identifier of the network device and a password of the network device.

8. The method according to claim 2, wherein the receiving, by the first device, first configuration indication information broadcast by the any third device comprises:
receiving, by the first device based on a Wireless Fidelity, Wi-Fi, protocol or a Bluetooth protocol, the first configuration indication information broadcast by the any third device.

9. The method according to claim 1, wherein the receiving, by the first device, first authentication information broadcast by the any third device through the first antenna comprises:
receiving, by the first device based on a Wi-Fi protocol or a Bluetooth protocol, the first authentication information broadcast by the any third device through the first antenna; and
the establishing, by the first device, a first communication connection to the any third device based on the first authentication information comprises:
establishing, by the first device, the first communication connection to the any third device based on the Wi-Fi protocol or the Bluetooth protocol and the first authentication information.

10. The method according to any one of claims 1 to 9, wherein the network device comprises a routing device, a gateway device, or a controlling device.

11. The method according to any one of claims 1 to 10, wherein at least one of the first device and the at least one third device is an Internet of things IoT device.

12. The method according to claim 11, wherein the second device is the IoT device.

13. A device, comprising a memory and a processor, wherein the memory is configured to store a computer program, and the device is configured to perform the method according to any one of claims 1 to 12 when the processor invoking the computer program.

14. A computer-readable storage medium, wherein the computer-readable storage medium stores a computer program, and when the computer program is executed by a processor, the method according to any one of claims 1 to 12 is implemented.

## Patentansprüche

1. Vorrichtungskonfigurationsverfahren, wobei das Verfahren Folgendes umfasst:
Empfangen von Netzwerkkonfigurationsinformationen durch eine erste Vorrichtung aus einer zweiten Vorrichtung; und
Senden der Netzwerkkonfigurationsinformationen durch die erste Vorrichtung an mindestens eine dritte Vorrichtung, wobei die Netzwerkkonfigurationsinformationen verwendet werden, um die erste Vorrichtung und die mindestens eine dritte Vorrichtung mit einer Netzwerkvorrichtung zu verbinden, eine beliebige dritte Vorrichtung mit einer ersten Antenne versehen ist, die erste Vorrichtung mit einer zweiten Antenne versehen ist, eine Übertragungsleistung der ersten Antenne kleiner als ein erster Leistungsschwellenwert ist, eine längste Übertragungsentfernung der ersten Antenne ein erster Entfernungsschwellenwert ist, welcher kleiner als oder gleich 1 Meter ist, und eine Übertragungsleistung der zweiten Antenne größer als der erste Leistungsschwellenwert ist,
wobei das Verfahren vor dem Senden der Netzwerkkonfigurationsinformationen durch die erste Vorrichtung an mindestens eine dritte Vorrichtung ferner Folgendes umfasst: Empfangen der ersten Authentifizierungsinformationen, die über die erste Antenne durch die beliebige dritte Vorrichtung übermittelt werden, durch die erste Vorrichtung; und
Herstellen einer ersten Kommunikationsverbindung zu einer beliebigen dritten Vorrichtung durch die erste Vorrichtung basierend auf den ersten Authentifizierungsinformationen; und
das Senden der Netzwerkkonfigurationsinformationen durch die erste Vorrichtung an mindestens eine dritte Vorrichtung Folgendes umfasst:
Senden der Netzwerkkonfigurationsinformationen durch die erste Vorrichtung an die mindestens eine dritte Vorrichtung basierend auf der ersten Kommunikationsverbindung.

2. Verfahren nach Anspruch 1, wobei das Verfahren vor dem Senden der Netzwerkkonfigurationsinformationen durch die erste Vorrichtung an mindestens eine dritte Vorrichtung ferner Folgendes umfasst:
Empfangen erster Konfigurationsanzeigeinformationen, die durch die beliebige dritte Vorrichtung übermittelt werden, durch die erste Vorrichtung, wobei die ersten Konfigurationsanzeigeinformationen anzeigt, dass sich die beliebige dritte Vorrichtung in einem unkonfigurierten Zustand befindet; und
Bestimmen durch die erste Vorrichtung basierend auf der ersten Konfigurationsanzeigeinformation, dass sich die beliebige dritte Vorrichtung in dem unkonfigurierten Zustand befindet.

3. Verfahren nach Anspruch 1, wobei eine der ersten Vorrichtung und der zweiten Vorrichtung mit der ersten Antenne versehen ist, die andere mit der zweiten Antenne versehen ist, und das Verfahren vor dem Empfangen von Netzwerkkonfigurationsinformationen aus der zweiten Vorrichtung durch die erste Vorrichtung ferner Folgendes umfasst:
Übermitteln zweiter Konfigurationsanzeigeinformationen durch die erste Vorrichtung an die zweite Vorrichtung, wobei die zweiten Konfigurationsanzeigeinformationen anzeigen, dass sich die erste Vorrichtung in einem unkonfigurierten Zustand befindet; und
das Verfahren nach dem Empfangen von Netzwerkkonfigurationsinformationen aus einer zweiten Vorrichtung durch eine erste Vorrichtung ferner Folgendes umfasst:
Verbinden der ersten Vorrichtung mit der Netzwerkvorrichtung basierend auf den Netzwerkkonfigurationsinformationen.

4. Verfahren nach Anspruch 1 oder 2, wobei das Verfahren vor dem Senden der Netzwerkkonfigurationsinformationen durch die erste Vorrichtung an die mindestens eine dritte Vorrichtung ferner Folgendes umfasst:
Übermitteln dritter Konfigurationsanzeigeinformationen durch die erste Vorrichtung an die mindestens eine dritte Vorrichtung, wobei die dritten Konfigurationsanzeigeinformationen verwendet werden, um auszulösen, dass die mindestens eine dritte Vorrichtung die Netzwerkkonfigurationsinformationen empfängt.

5. Verfahren nach einem der Ansprüche 1 bis 4, wobei die erste Vorrichtung mit der ersten Antenne versehen ist, und das Verfahren vor dem Empfangen von Netzwerkkonfigurationsinformationen aus der zweiten Vorrichtung durch die erste Vorrichtung ferner Folgendes umfasst:
Übermitteln zweiter Authentifizierungsinformationen über die erste Antenne durch die erste Vorrichtung an die zweite Vorrichtung, wobei die zweiten Authentifizierungsinformationen durch die zweite Vorrichtung verwendet werden, um eine zweite Kommunikationsverbindung mit der ersten Vorrichtung herzustellen; und
das Empfangen von Netzwerkkonfigurationsinformationen aus einer zweiten Vorrichtung durch eine erste Vorrichtung Folgendes umfasst:
Empfangen der Netzwerkkonfigurationsanzeigeinformationen, die durch die zweite Vorrichtung gesendet werden, durch die erste Vorrichtung basierend auf der zweiten Kommunikationsverbindung.

6. Verfahren nach einem der Ansprüche 1 bis 4, wobei die erste Vorrichtung mit der ersten Antenne versehen ist, und das Senden der Netzwerkkonfigurationsinformationen durch die erste Vorrichtung an die mindestens eine dritte Vorrichtung Folgendes umfasst:
Übermitteln der Netzwerkkonfigurationsinformationen über die erste Antenne durch die erste Vorrichtung an die mindestens eine dritte Vorrichtung.

7. Verfahren nach einem der Ansprüche 1 bis 6, wobei die Netzwerkkonfigurationsinformationen eine Vorrichtungskennung der Netzwerkvorrichtung und ein Passwort der Netzwerkvorrichtung umfassen.

8. Verfahren nach Anspruch 2, wobei das Empfangen erster Konfigurationsanzeigeinformationen, die durch die beliebige dritte Vorrichtung übermittelt werden, durch die erste Vorrichtung Folgendes umfasst:
Empfangen der ersten Konfigurationsanzeigeinformationen, die durch die beliebige dritte Vorrichtung übermittelt werden, durch die erste Vorrichtung basierend auf einem Wireless-Fidelity-Protokoll, Wi-Fi-Protokoll, oder einem Bluetooth-Protokoll.

9. Verfahren nach Anspruch 1, wobei das Empfangen erster Authentifizierungsinformationen, die über die erste Antenne durch die beliebige dritte Vorrichtung übermittelt werden, durch die erste Vorrichtung Folgendes umfasst:
Empfangen der ersten Authentifizierungsinformationen, die über die erste Antenne durch die beliebige dritte Vorrichtung übermittelt werden, durch die erste Vorrichtung basierend auf einem Wi-Fi-Protokoll oder einem Bluetooth-Protokoll; und
das Herstellen einer ersten Kommunikationsverbindung zu einer beliebigen dritten Vorrichtung durch die erste Vorrichtung basierend auf den ersten Authentifizierungsinformationen Folgendes umfasst:
Herstellen der ersten Kommunikationsverbindung zu der beliebigen dritten Vorrichtung durch die erste Vorrichtung basierend auf dem Wi-Fi-Protokoll oder dem Bluetooth-Protokoll und den ersten Authentifizierungsinformationen.

10. Verfahren nach einem der Ansprüche 1 bis 9, wobei die Netzwerkvorrichtung eine Routing-Vorrichtung, eine Gateway-Vorrichtung oder eine Steuerungsvorrichtung umfasst.

11. Verfahren nach einem der Ansprüche 1 bis 10, wobei mindestens eine der ersten Vorrichtung und der mindestens einen dritten Vorrichtung eine Internet-of-Things-Vorrichtung, IoT-Vorrichtung, ist.

12. Verfahren nach Anspruch 11, wobei die zweite elektronische Vorrichtung die IoT-Vorrichtung ist.

13. Vorrichtung, umfassend einen Speicher und einen Prozessor, wobei der Speicher dazu konfiguriert ist, ein Computerprogramm zu speichern, und die Vorrichtung dazu konfiguriert ist, das Verfahren nach einem der Ansprüche 1 bis 12 durchzuführen, wenn der Prozessor das Computerprogramm aufruft.

14. Computerlesbares Speichermedium, wobei das computerlesbare Speichermedium ein Computerprogramm speichert; und, wenn das Computerprogramm durch einen Prozessor ausgeführt wird, das Verfahren nach einem der Ansprüche 1 bis 12 implementiert wird.

## Revendications

1. Procédé de configuration de dispositif, dans lequel le procédé comprend :
la réception, par un premier dispositif, d'informations de configuration réseau provenant d'un deuxième dispositif ; et
l'envoi, par le premier dispositif, des informations de configuration réseau à au moins un troisième dispositif, dans lequel les informations de configuration réseau sont utilisées pour connecter le premier dispositif et l'au moins un troisième dispositif à un dispositif réseau, un quelconque troisième dispositif est doté d'une première antenne, le premier dispositif est doté d'une seconde antenne, une puissance d'émission de la première antenne est inférieure à un premier seuil de puissance, une distance d'émission maximale de la première antenne correspond à un premier seuil de distance qui est inférieur ou égal à un 1 mètre et une puissance d'émission de la seconde antenne est supérieure au premier seuil de puissance,
dans lequel avant l'envoi, par le premier dispositif, des informations de configuration réseau à au moins un troisième dispositif, le procédé comprend en outre :
la réception, par le premier dispositif, de premières informations d'authentification diffusées par un quelconque troisième dispositif à travers la première antenne ; et
l'établissement, par le premier dispositif, d'une première connexion de communication avec un quelconque troisième dispositif sur la base des premières informations d'authentification ; et
l'envoi, par le premier dispositif, des informations de configuration réseau à au moins un troisième dispositif comprend :
l'envoi, par le premier dispositif, des informations de configuration réseau à l'au moins un troisième dispositif sur la base de la première connexion de communication.

2. Procédé selon la revendication 1, dans lequel avant l'envoi, par le premier dispositif, des informations de configuration réseau à au moins un troisième dispositif, le procédé comprend en outre :
la réception, par le premier dispositif, de premières informations d'indication de configuration diffusées par un quelconque troisième dispositif, dans lequel les premières informations d'indication de configuration indiquent que l'un quelconque troisième dispositif est dans un état non configuré ; et
la détermination, par le premier dispositif sur la base des premières informations d'indication de configuration, que l'un quelconque troisième dispositif est dans l'état non configuré.

3. Procédé selon la revendication 1, dans lequel l'un du premier dispositif et du deuxième dispositif est doté de la première antenne, l'autre est doté de la seconde antenne, et avant la réception, par le premier dispositif, des informations de configuration réseau provenant du deuxième dispositif, le procédé comprend en outre :
la diffusion, par le premier dispositif, de deuxièmes informations d'indication de configuration au deuxième dispositif, dans lequel les deuxièmes informations d'indication de configuration indiquent que le premier dispositif est dans un état non configuré ; et
après la réception, par un premier dispositif, d'informations de configuration réseau provenant d'un deuxième dispositif, le procédé comprend en outre :
la connexion du premier dispositif au dispositif réseau sur la base des informations de configuration réseau.

4. Procédé selon la revendication 1 ou 2, dans lequel avant l'envoi, par le premier dispositif, des informations de configuration réseau à au moins un troisième dispositif, le procédé comprend en outre :
la diffusion, par le premier dispositif, de troisièmes informations d'indication de configuration à l'au moins un troisième dispositif, dans lequel les troisièmes informations d'indication de configuration sont utilisées pour déclencher la réception par l'au moins un troisième dispositif des informations de configuration réseau.

5. Procédé selon l'une quelconque des revendications 1 à 4, dans lequel le premier dispositif est doté de la première antenne, et avant la réception, par le premier dispositif, des informations de configuration réseau depuis le deuxième dispositif, le procédé comprend en outre :
la diffusion, par le premier dispositif, de secondes informations d'authentification au deuxième dispositif à travers la première antenne, dans lequel les secondes informations d'authentification sont utilisées par le deuxième dispositif pour établir une seconde connexion de communication avec le premier dispositif ; et
la réception, par un premier dispositif, d'informations de configuration réseau provenant d'un deuxième dispositif comprend :
la réception, par le premier dispositif sur la base de la seconde connexion de communication, des informations de configuration réseau envoyées par le deuxième dispositif.

6. Procédé selon l'une quelconque des revendications 1 à 4, dans lequel le premier dispositif est doté de la première antenne, et l'envoi, par le premier dispositif, des informations de configuration réseau à au moins un troisième dispositif comprend :
la diffusion, par le premier dispositif, des informations de configuration réseau à l'au moins un troisième dispositif à travers la première antenne.

7. Procédé selon l'une quelconque des revendications 1 à 6, dans lequel les informations de configuration réseau comprennent un identifiant de dispositif du dispositif réseau et un mot de passe du dispositif réseau.

8. Procédé selon la revendication 2, dans lequel la réception, par le premier dispositif, des premières informations d'indication de configuration diffusées par l'un quelconque troisième dispositif comprend :
la réception, par le premier dispositif sur la base d'un protocole Fidélité Sans Fil, Wi-Fi ou Bluetooth, des premières informations d'indication de configuration diffusées par l'un quelconque troisième dispositif.

9. Procédé selon la revendication 1, dans lequel la réception, par le premier dispositif, de premières informations d'authentification diffusées par l'un quelconque troisième dispositif à travers la première antenne comprend :
la réception, par le premier dispositif sur la base d'un protocole Wi-Fi ou Bluetooth, des premières informations d'authentification diffusées par l'un quelconque troisième dispositif à travers la première antenne ; et
l'établissement, par le premier dispositif, d'une première connexion de communication avec l'un quelconque troisième dispositif sur la base des premières informations d'authentification comprend :
l'établissement, par le premier dispositif, de la première connexion de communication avec l'un quelconque troisième dispositif sur la base du protocole Wi-Fi ou du protocole Bluetooth et des premières informations d'authentification.

10. Procédé selon l'une quelconque des revendications 1 à 9, dans lequel le dispositif réseau comprend un dispositif de routage, un dispositif de passerelle ou un dispositif de commande.

11. Procédé selon l'une quelconque des revendications 1 à 10, dans lequel au moins l'un du premier dispositif et de l'au moins un troisième dispositif est un dispositif de l'Internet des objets IoT.

12. Procédé selon la revendication 11, dans lequel le deuxième dispositif est le dispositif IoT.

13. Dispositif, comprenant une mémoire et un processeur, dans lequel la mémoire est configurée pour stocker un programme informatique, et le dispositif est configuré pour réaliser le procédé selon l'une quelconque des revendications 1 à 12 lorsque le processeur invoque le programme informatique.

14. Support de stockage lisible par ordinateur, dans lequel le support de stockage lisible par ordinateur stocke un programme informatique, et lorsque le programme informatique est exécuté par un processeur, le procédé selon l'une quelconque des revendications 1 à 12 est mis en œuvre.
